# EUROPEAN PATENT APPLICATION

(11) **EP 4 557 870 A1**
(43) Date of publication of application: **21.05.2025**
(21) Application number: 23854230.2
(22) Date of filing: 31.07.2023
(51) Int. Cl.: H04W 74/08

(54) **COMMUNICATION METHOD AND APPARATUS BASED ON CHANNEL CONTENTION**

(30) Priority: 19.08.2022 CN 202210999764
(71) Applicant: Huawei Technologies Co., Ltd., Shenzhen, Guangdong 518129 (CN)
(72) Inventor: YANG, Mao, Xi'an, Shaanxi 710072 (CN); LI, Bo, Xi'an, Shaanxi 710072 (CN); LI, Yunbo, Shenzhen, Guangdong 518129 (CN)
(74) Representative: Goddar, Heinz J.
(86) International application number: PCT/CN2023/110382
(87) International publication number: WO 2024/037326

(57) **Abstract**

A channel contention-based communication method and an apparatus are provided, and are used in a wireless local area network system that supports the IEEE 802.11ax next-generation Wi-Fi protocol such as 802.11be, Wi-Fi 7, or EHT, or 802.11 series protocols such as a next-generation standard of 802.11be, Wi-Fi 8, and UHR; and may be further used in a UWB-based wireless personal area network system, a sensing (sensing) system, and the like. The method includes: An AP sends an MU-RTS frame. A STA receives the MU-RTS frame, and performs UL transmission or P2P transmission in a first time period based on the MU-RTS frame. The MU-RTS frame may include at least two user information fields, or may not include a user information field. One user information field may correspond to one or more stations. In embodiments of this application, multi-user concurrency can be ensured as much as possible, thereby improving system efficiency.

## Description

This application claims priority to Chinese Patent Application No. 202210999764.0, filed with the China National Intellectual Property Administration on August 19, 2022 and entitled "CHANNEL CONTENTION-BASED COMMUNICATION METHOD AND APPARATUS", which is incorporated herein by reference in its entirety.

### TECHNICAL FIELD

This application relates to the field of communication technologies, and in particular, to a channel contention-based communication method and an apparatus.

### BACKGROUND

A wireless local area network (wireless local area network, WLAN) system operates on an unlicensed frequency band. A wireless channel of the wireless local area network is shared. Before transmission, channel access needs to be performed first. Before a station needs to transmit a radio frame, the station needs to first listen to whether another station is performing transmission. If a result of listening to a channel is busy, transmission is temporarily suspended until the channel becomes idle. After the channel becomes idle, random backoff needs to be further performed before data transmission, to cope with a collision between a plurality of potential transmitting stations through random backoff. After the random backoff process in an idle state of the channel ends, the station may send the radio frame.

In a commonly-used enhanced distributed channel access (enhanced distributed channel access, EDCA) contention mechanism, after completing channel backoff, the station sends a first frame. If there is a response frame for the first frame, after the response frame is successfully received, it indicates that channel contention succeeds; or otherwise, backoff needs to be performed again. If the first frame does not require a response frame, after the first frame is sent, it indicates that channel contention succeeds. After channel contention succeeds, the station may reserve a period of time for data transmission. The period of time is referred to as a transmission opportunity (transmission opportunity, TXOP). A station that successfully reserves a TXOP is referred to as a TXOP holder (TXOP holder). In the TXOP, only the TXOP holder can actively send data, and other stations can only receive data or send a corresponding response frame.

Using the foregoing solution causes low system efficiency.

### SUMMARY

Embodiments of this application provide a channel contention-based communication method and an apparatus, to effectively improve system efficiency.

According to a first aspect, an embodiment of this application provides a channel contention-based communication method. The method includes:
receiving a multi-user (multiple user, MU) request to send (request to send, RTS) (MU-RTS) frame, where the MU-RTS frame includes a plurality of user information (user info) fields, the user information field includes an allocation duration (allocation duration) field, one user information field corresponds to one station, and the allocation duration field indicates a first time period corresponding to the station corresponding to the user information field; and performing point-to-point (point-to-point, P2P) transmission in the first time period based on the MU-RTS frame.

In this embodiment of this application, after a station (station, STA) receives the MU-RTS frame, if the user information field in the frame indicates the STA, the STA may learn that an access point (access point, AP) shares a period of time (for example, the first time period) in a TXOP with the STA. Therefore, the STA may perform P2P transmission in the first time period, and a plurality of STAs indicated by using the plurality of user information fields may all perform P2P transmission, to implement concurrent transmission, thereby improving system efficiency.

It may be understood that the first aspect may be applied to a scenario in which primary and secondary stations are distinguished by using an MU-RTS frame (that is, an AP specifies the primary and secondary stations by using the MU-RTS frame). For example, the first aspect may be performed by a secondary station when the primary and secondary stations are distinguished by using the MU-RTS frame. Alternatively, the first aspect is applied to a scenario in which primary and secondary stations are not distinguished (that is, the AP does not specify the primary and secondary stations by using an MU-RTS, but specifies a station by using a user information field). For example, the first aspect may be performed by the station specified by using the user information field. Alternatively, the first aspect is applied to a scenario in which a maximum transmit power of a station is indicated by using a user information field in an MU-RTS frame. For example, the first aspect is performed by the station specified by using the user information field, and the station is allowed to perform P2P transmission in the first time period.

In a possible implementation, the performing P2P transmission in the first time period based on the MU-RTS frame includes: ignoring, based on the MU-RTS frame, a network allocation vector (network allocation vector, NAV) configured by an access point, performing channel contention in the first time period, and performing P2P transmission in the first time period when channel contention succeeds.

In this embodiment of this application, by ignoring the NAV configured by the AP, the STA may have an opportunity to perform channel contention, to perform P2P transmission in a case of channel contention, thereby ensuring feasibility of a transmission opportunity sharing (TXOP sharing, TXS) packet detect (packet detect, PD) TXS_PD-based spatial reuse (spatial reuse, SR) mechanism provided in this embodiment of this application. In this way, multi-user concurrent transmission is supported, thereby improving system efficiency. It may be understood that ignoring the NAV configured by the AP may be equivalent to the NAV configured by the AP being 0, or equivalent to a case in which the STA may further perform a subsequent operation based on the NAV configured by the AP being 0.

In a possible implementation, the ignoring, based on the MU-RTS frame, a NAV configured by an AP includes at least one of the following: ignoring, based on a value of a triggered TXOP sharing mode field in the MU-RTS frame, the NAV configured by the AP; ignoring, based on a quantity of user information fields in the MU-RTS frame, the NAV configured by the AP; and ignoring, based on a primary/secondary indication field in the user information field in the MU-RTS frame, the NAV configured by the AP.

It may be understood that, the STA ignoring the NAV configured by the AP may also be understood as that the STA learns that the STA is allowed to share the first time period, or the STA is allowed to perform the TXS_PD-based SR mechanism.

In a possible implementation, the performing channel contention in the first time period includes: when a physical layer protocol data unit (PHY protocol data unit, PPDU) is received, performing backoff based on a received power of the PPDU and a first clear channel assessment (clear channel assessment, CCA) threshold, where the PPDU includes an intra-basic service set (basic service set, BSS) PPDU, an inter-BSS PPDU, or a PPDU that cannot be determined as an intra-BSS PPDU or an inter-BSS PPDU, and the first CCA threshold is greater than or equal to a CCA packet detect (CCA_PD) threshold.

In this embodiment of this application, backoff is performed based on the first CCA threshold greater than or equal to the CCA_PD threshold, to ensure that a maximum quantity of stations perform channel contention. In this way, more stations can be supported in performing concurrent transmission, thereby improving system efficiency.

In this embodiment of this application, the PPDU includes the intra-BSS PPDU, the inter-BSS PPDU, and the PPDU that cannot be determined as an intra-BSS PPDU or an inter-BSS PPDU. In other words, a type of the PPDU is not limited. Even if the STA receives the PPDU from the intra-BSS, the STA can still perform P2P transmission. In this way, feasibility of the TXS_PD-based SR mechanism is ensured, so that a plurality of STAs can implement concurrent transmission.

In a possible implementation, the PPDU includes the intra-BSS PPDU.

In this embodiment of this application, when the intra-BSS PPDU is received, backoff is performed based on the received power of the PPDU and the first CCA threshold. The TXS_PD-based SR mechanism may take effect for the intra-BSS PPDU, to be distinguished from an existing overlapping basic service set (overlapping basic service set, OBSS) packet detect (OBSS packet detect, OBSS_PD)-based spatial reuse (spatial reuse) mechanism.

In a possible implementation, the performing backoff based on a received power of the PPDU and a first clear channel assessment CCA threshold includes: further performing backoff if the received power of the PPDU is less than or equal to the first CCA threshold; or stopping backoff if the received power of the PPDU is greater than the first CCA threshold.

In a possible implementation, the plurality of user information fields include at least one first user information field, and a station corresponding to the first user information field is a secondary station.

In a possible implementation, the first user information field is a non-1^{st} user information field in the plurality of user information fields; or the first user information field further includes a primary/secondary indication field, and the primary/secondary indication field indicates that the station corresponding to the first user information field is the secondary station.

In this embodiment of this application, by distinguishing the primary station or the secondary station, it can be preferentially ensured that the primary station can implement transmission. Different secondary stations may access a channel through channel contention, to perform P2P transmission. Further, the first time period is used as much as possible, to ensure that resources can be effectively used. In addition, concurrent transmission is further supported, thereby improving system efficiency.

In a possible implementation, the MU-RTS frame further includes a triggered transmission opportunity TXOP sharing mode field, and a value of the triggered TXOP sharing mode field is 2 or a value other than 0, 1, and 2.

In a possible implementation, the performing P2P transmission in the first time period based on the MU-RTS frame includes: performing P2P transmission in the first time period based on at least one of the following: an order of a corresponding user information field, a primary/secondary indication field in the corresponding user information field, and the value of the triggered TXOP sharing mode field in the MU-RTS frame.

In this embodiment of this application, based on the order of the user information field or the primary/secondary indication field, the station can effectively learn that the station is a secondary station, to learn that the station can perform P2P transmission. Based on the value of the triggered TXOP sharing mode field, for example, 2 or 3, the station can learn that the station is allowed to perform concurrent transmission, so that the station can perform channel contention.

In a possible implementation, the user information field further includes a power indication field, and the power indication field indicates a maximum transmit power of the station corresponding to the user information field in the first time period.

In this embodiment of this application, the user information field includes the power indication field, so that the corresponding station can perform P2P transmission based on the maximum transmit power indicated by the AP. Through appropriately allocating the maximum transmit power, interference between different stations can be effectively reduced, to ensure that a plurality of stations can perform P2P transmission in the first time period.

In a possible implementation, the performing P2P transmission in the first time period based on the MU-RTS frame includes: performing P2P transmission in the first time period based on the maximum transmit power.

In a possible implementation, the performing P2P transmission in the first time period based on the maximum transmit power includes: when the user information field includes a first indication field, and the first indication field indicates that the station corresponding to the user information field is allowed to perform P2P transmission in the first time period, performing P2P transmission in the first time period based on the maximum transmit power; or when the MU-RTS frame includes a triggered TXOP sharing mode field, and a value of the TXOP sharing mode field is 2 or a value other than 0, 1, and 2, performing P2P transmission in the first time period based on the maximum transmit power.

According to a second aspect, an embodiment of this application provides a channel contention-based communication method. The method includes:
receiving a multi-user request to send MU-RTS frame, where the MU-RTS frame includes a plurality of user information fields, the user information field includes an allocation duration field, one user information field corresponds to one station, and the allocation duration field indicates a first time period corresponding to the station corresponding to the user information field; and performing uplink UL transmission or point-to-point P2P transmission in the first time period based on the MU-RTS frame.

In this embodiment of this application, after a station (station, STA) receives the MU-RTS frame, if the user information field in the frame indicates the STA, the STA may learn that an access point (access point, AP) shares a period of time (for example, the first time period) in a TXOP with the STA. Therefore, the STA may perform UL transmission or P2P transmission in the first time period, thereby effectively improving a possibility that the station performs UL transmission or P2P transmission.

It may be understood that the second aspect may be applied to a scenario in which primary and secondary stations are distinguished by using an MU-RTS frame (that is, an AP specifies the primary and secondary stations by using the MU-RTS frame). For example, the first aspect may be performed by a primary station when the primary and secondary stations are distinguished by using the MU-RTS frame. Alternatively, the second aspect is applied to a scenario in which a maximum transmit power of a station is indicated by using an MU-RTS frame. For example, the second aspect may be performed by the station specified by using the user information field, and the station is allowed to perform UL transmission or P2P transmission in the first time period.

In a possible implementation, the plurality of user information fields include one second user information field, and the second user information field corresponds to a primary station.

In a possible implementation, the second user information field is a 1^{st} user information field in the plurality of user information fields; or the second user information field further includes a primary/secondary indication field, and the primary/secondary indication field indicates that the station corresponding to the second user information field is the primary station.

In this embodiment of this application, by distinguishing the primary station or the secondary station, it can be preferentially ensured that the primary station can implement transmission. Different secondary stations may access a channel through channel contention, to perform P2P transmission. Further, the first time period is used as much as possible, to ensure that resources can be effectively used. In addition, concurrent transmission is further supported, thereby improving system efficiency.

In a possible implementation, the MU-RTS frame further includes a triggered transmission opportunity TXOP sharing mode field, and a value of the triggered TXOP sharing mode field is 2 or a value other than 0, 1, and 2.

In a possible implementation, the performing UL transmission or P2P transmission in the first time period based on the MU-RTS frame includes: performing UL transmission or P2P transmission in the first time period based on at least one of the following: an order of a corresponding user information field, a primary/secondary indication field in the corresponding user information field, and the value of the triggered TXOP sharing mode field in the MU-RTS frame.

In this embodiment of this application, based on the order of the user information field or the primary/secondary indication field, the station can effectively learn that the station is a primary station, to learn that the station can perform P2P transmission or UL transmission.

In a possible implementation, the user information field further includes a power indication field, and the power indication field indicates a maximum transmit power of the station corresponding to the user information field in the first time period.

In a possible implementation, the performing UL transmission or P2P transmission in the first time period based on the MU-RTS frame includes: performing UL transmission or P2P transmission in the first time period based on the maximum transmit power.

In this embodiment of this application, the user information field includes the power indication field, so that the corresponding station can perform P2P transmission based on the maximum transmit power indicated by the AP. Through appropriately allocating the maximum transmit power, interference between different stations can be effectively reduced, to ensure that a plurality of stations can perform P2P transmission in the first time period.

In a possible implementation, the performing UL transmission or P2P transmission in the first time period based on the maximum transmit power includes: when the user information field includes a first indication field, and the first indication field indicates that the station corresponding to the user information field is allowed to perform UL transmission or P2P transmission in the first time period, performing UL transmission or P2P transmission in the first time period based on the maximum transmit power; or when the MU-RTS frame includes a triggered TXOP sharing mode field, and a value of the TXOP sharing mode field is 2 or a value other than 0, 1, and 2, performing UL transmission or P2P transmission in the first time period based on the maximum transmit power.

According to a third aspect, an embodiment of this application provides a channel contention-based communication method. The method includes:
generating a multi-user request to send MU-RTS frame, where the MU-RTS frame includes a plurality of user information fields, the user information field includes an allocation duration field, one user information field corresponds to one station, and the allocation duration field indicates a first time period corresponding to the station corresponding to the user information field; and sending the MU-RTS frame.

In this embodiment of this application, an access point (access point, AP) shares a period of time (for example, the first time period) in a TXOP with a plurality of stations (stations, STAs). In this way, the period of time in the TXOP is effectively used, and a spatial reuse capability is effectively improved through sharing the period of time with the plurality of STAs, thereby improving communication efficiency of the system.

It may be understood that the third aspect may be performed by an AP. The second aspect may be applied to a scenario in which the AP specifies primary and secondary stations by using an MU-RTS frame, or may be applied to a scenario in which the AP does not specify primary and secondary stations by using an MU-RTS but specifies a station by using a user information field, or may be applied to a scenario in which the AP indicates a maximum transmit power of a station by using a user information field in an MU-RTS frame.

In a possible implementation, the MU-RTS frame further includes a triggered transmission opportunity TXOP sharing mode field, and a value of the triggered TXOP sharing mode field is 2 or a value other than 0, 1, and 2.

In a possible implementation, the plurality of user information fields include at least one first user information field, and a station corresponding to the first user information field is a secondary station.

In a possible implementation, the first user information field is a non-1^{st} user information field in the plurality of user information fields; or the first user information field further includes a primary/secondary indication field, and the primary/secondary indication field indicates that the station corresponding to the first user information field is the secondary station.

In a possible implementation, the plurality of user information fields include one second user information field, and the second user information field corresponds to a primary station.

In a possible implementation, the second user information field is a 1^{st} user information field in the plurality of user information fields; or the second user information field further includes a primary/secondary indication field, and the primary/secondary indication field indicates that the station corresponding to the second user information field is the primary station.

In a possible implementation, the user information field further includes a power indication field, and the power indication field indicates a maximum transmit power of the station corresponding to the user information field in the first time period.

In a possible implementation, the user information field further includes a first indication field, and the first indication field indicates that the station corresponding to the user information field is allowed to perform uplink UL transmission or point-to-point P2P transmission in the first time period, or the first indication field indicates that the station corresponding to the user information field is allowed to perform P2P transmission in the first time period.

According to a fourth aspect, an embodiment of this application provides a channel contention-based communication method. The method includes:
receiving a multi-user request to send MU-RTS frame, where the MU-RTS frame includes a first user information field and a second user information field, the first user information field corresponds to one station, the second user information field corresponds to one or more stations, the first user information field includes a first allocation duration field, the first allocation duration field indicates a first time period corresponding to a station corresponding to the first user information field, the second user information field includes a second allocation duration field, and the second allocation duration field indicates a second time period corresponding to a station corresponding to the second user information field; and performing, by the station corresponding to the second user information field, point-to-point P2P transmission in the second time period based on the MU-RTS frame.

In this embodiment of this application, the MU-RTS frame includes two user information fields. One user information field may correspond to one station, and the other user information field may correspond to one or more stations (which may also be understood as that no station is specified), to ensure that a plurality of stations can perform concurrent transmission, thereby improving system efficiency. In addition, two user information fields indicate two or more stations, thereby reducing signaling overheads.

It may be understood that the fourth aspect may be applied to a scenario in which one STA is specified by using one user information field in an MU-RTS frame, and no STA is specified by using another user information field in the MU-RTS frame. For example, an execution entity may be a STA that is not specified by the AP by using the another user information field.

In a possible implementation, that the second user information field corresponds to one or more stations includes that a value of an association identifier AID included in the second user information field is any value in 0, 2008-2044, and 2047-4094.

In this embodiment of this application, an objective that the AP does not specify a STA can be implemented by using the value of the AID in the second user information field, so that all stations that receive the MU-RTS frame can perform channel contention to perform P2P transmission.

In a possible implementation, the performing, by the station corresponding to the second user information field, P2P transmission in the second time period based on the MU-RTS frame includes that the station corresponding to the second user information field ignores, based on the MU-RTS frame, a network allocation vector NAV configured by an access point, performs channel contention in the second time period, and performs P2P transmission in the second time period when channel contention succeeds.

In this embodiment of this application, the ignoring, based on the MU-RTS frame, a NAV configured by an AP includes at least one of the following: ignoring, based on a quantity of user information fields, the NAV configured by the AP; ignoring, based on a value of an AID in the second user information field, the NAV configured by the AP; and ignoring, based on a value of a triggered TXOP sharing mode field in the MU-RTS frame, the NAV configured by the AP.

In a possible implementation, the performing channel contention in the second time period includes: if the station receives a physical layer protocol data unit PPDU, performing backoff based on a received power of the PPDU and a first clear channel assessment CCA threshold, where the PPDU includes an intra-basic service set BSS PPDU, an inter-BSS PPDU, or a PPDU that cannot be determined as an intra-BSS PPDU or an inter-BSS PPDU, and the first CCA threshold is greater than or equal to a CCA packet detect threshold.

In a possible implementation, the PPDU includes the intra-BSS PPDU.

In a possible implementation, the performing backoff based on a received power of the PPDU and a first clear channel assessment CCA threshold includes: further performing backoff if the received power of the PPDU is less than or equal to the first CCA threshold; or stopping backoff if the received power of the PPDU is greater than the first CCA threshold.

According to a fifth aspect, an embodiment of this application provides a channel contention-based communication method. The method includes:
generating a multi-user request to send MU-RTS frame, where the MU-RTS frame includes a first user information field and a second user information field, the first user information field corresponds to one station, the second user information field corresponds to one or more stations, the first user information field includes a first allocation duration field, the first allocation duration field indicates a first time period corresponding to a station corresponding to the first user information field, the second user information field includes a second allocation duration field, and the second allocation duration field indicates a second time period corresponding to a station corresponding to the second user information field; and sending the MU-RTS frame.

In this embodiment of this application, the MU-RTS frame includes two user information fields. One user information field may correspond to one station, and the other user information field may correspond to one or more stations (which may also be understood as that no station is specified), to ensure that a plurality of stations can perform concurrent transmission, thereby improving system efficiency. In addition, two user information fields indicate two or more stations, thereby reducing signaling overheads.

It may be understood that the fifth aspect may be applied to a scenario in which one STA is specified by using one user information field in an MU-RTS frame, and no STA is specified by using another user information field in the MU-RTS frame. For example, an execution entity may be an AP.

In a possible implementation, that the second user information field corresponds to one or more stations includes that a value of an association identifier AID included in the second user information field is any value in 0, 2008-2044, and 2047-4094.

According to a sixth aspect, an embodiment of this application provides a channel contention-based communication method. The method includes:
receiving a multi-user request to send MU-RTS frame, where the MU-RTS frame includes a common information field, the common information field includes a second indication field, the second indication field indicates whether a plurality of stations are allowed to share a first time period, and the first time period is a period of time in a transmission opportunity TXOP; and when the second indication field indicates that the plurality of stations are allowed to share the first time period, performing point-to-point P2P transmission in the first time period based on the MU-RTS frame.

In this embodiment of this application, the common information field in the MU-RTS frame may include the second indication field. Therefore, a STA that receives the MU-RTS frame may determine, based on the second indication information, that the STA is allowed to perform a TXS_PD-based SR mechanism, to ensure that a plurality of stations can perform concurrent transmission, thereby improving system efficiency and reducing signaling overheads.

It may be understood that the MU-RTS frame in this embodiment of this application may not include a user information field.

In a possible implementation, the common information field further includes a field indicating the first time period.

In a possible implementation, the MU-RTS frame further includes a triggered transmission opportunity TXOP sharing mode field, and a value of the triggered TXOP sharing mode field is 2 or a value other than 0, 1, and 2.

It may be understood that, when the common information field includes the second indication field, the value of the triggered TXOP sharing mode field may be 2 or a value other than 0, 1, and 2. When the common information field does not include the second indication field, the value of the triggered TXOP sharing mode field may be a value other than 0, 1, and 2, for example, 3. Therefore, the STA that receives the MU-RTS frame may learn, based on the triggered TXOP sharing mode field, that the STA is allowed to perform the TXS_PD-based SR mechanism and can further perform P2P transmission in the first time period. When the common information field does not include the second indication field, the value of the triggered TXOP sharing mode field may also be 2 or a value other than 0, 1, and 2. In this case, the STA that receives the MU-RTS frame may learn, based on a case in which the MU-RTS frame does not include the user information field, that the STA is allowed to perform the TXS_PD-based SR mechanism and can further perform P2P transmission in the first time period.

In a possible implementation, the performing P2P transmission in the first time period based on the MU-RTS frame includes: ignoring, based on the MU-RTS frame, a network allocation vector NAV configured by an access point, performing channel contention in the first time period, and performing P2P transmission in the first time period when channel contention succeeds.

In this embodiment of this application, the ignoring, based on the MU-RTS frame, a NAV configured by an AP includes at least one of the following: ignoring, based on a quantity of user information fields, the NAV configured by the AP; ignoring, based on the second indication field in the common information field, the NAV configured by the AP; and ignoring, based on a value of a triggered TXOP sharing mode field in the MU-RTS frame, the NAV configured by the AP.

In a possible implementation, the performing channel contention in the first time period includes: if the station receives a physical layer protocol data unit PPDU, performing backoff based on a received power of the PPDU and a first clear channel assessment CCA threshold, where the PPDU includes an intra-basic service set BSS PPDU, an inter-BSS PPDU, or a PPDU that cannot be determined as an intra-BSS PPDU or an inter-BSS PPDU, and the first CCA threshold is greater than or equal to a CCA packet detect threshold.

In a possible implementation, the PPDU includes the intra-BSS PPDU.

In a possible implementation, the performing backoff based on a received power of the PPDU and a first clear channel assessment CCA threshold includes: further performing backoff if the received power of the PPDU is less than or equal to the first CCA threshold; or stopping backoff if the received power of the PPDU is greater than the first CCA threshold.

According to a seventh aspect, an embodiment of this application provides a channel contention-based communication method. The method includes:
generating a multi-user request to send MU-RTS frame, where the MU-RTS frame includes a common information field, the common information field includes a second indication field, the second indication field indicates whether a plurality of stations are allowed to share a first time period, and the first time period is a period of time in a transmission opportunity TXOP; and sending the MU-RTS frame.

In a possible implementation, the common information field further includes a field indicating the first time period.

In a possible implementation, the MU-RTS frame further includes a triggered transmission opportunity TXOP sharing mode field, and a value of the triggered TXOP sharing mode field is 2 or a value other than 0, 1, and 2.

According to an eighth aspect, an embodiment of this application provides a communication apparatus, configured to perform the method in the first aspect, the second aspect, the fourth aspect, the sixth aspect, or any possible implementation. The communication apparatus includes units configured to perform the method in the first aspect, the second aspect, the fourth aspect, the sixth aspect, or any possible implementation. For example, the communication apparatus includes a processing unit and a transceiver unit.

According to a ninth aspect, an embodiment of this application provides a communication apparatus, configured to perform the method in the third aspect, the fifth aspect, the seventh aspect, or any possible implementation. The communication apparatus includes units configured to perform the method in the third aspect, the fifth aspect, the seventh aspect, or any possible implementation. For example, the communication apparatus includes a processing unit and a transceiver unit.

According to a tenth aspect, an embodiment of this application provides a communication apparatus. The communication apparatus includes a processor, configured to perform the method shown in the first aspect, the second aspect, the fourth aspect, the sixth aspect, or any possible implementation. Alternatively, the processor is configured to execute a program stored in a memory. When the program is executed, the method in the first aspect, the second aspect, the fourth aspect, the sixth aspect, or any possible implementation is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to: receive a signal and/or send a signal.

According to an eleventh aspect, an embodiment of this application provides a communication apparatus. The communication apparatus includes a processor configured to perform the method in the third aspect, the fifth aspect, the seventh aspect, or any possible implementation. Alternatively, the processor is configured to execute a program stored in a memory. When the program is executed, the method in the third aspect, the fifth aspect, the seventh aspect, or any possible implementation is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to: receive a signal and/or send a signal.

According to a twelfth aspect, an embodiment of this application provides a chip. The chip includes a logic circuit and an interface. The logic circuit is coupled to the interface. The interface is configured to input and/or output code instructions. The logic circuit is configured to execute the code instructions, so that the method in the first aspect, the second aspect, the fourth aspect, the sixth aspect, or any possible implementation is performed.

According to a thirteenth aspect, an embodiment of this application provides a chip. The chip includes a logic circuit and an interface. The logic circuit is coupled to the interface. The interface is configured to input and/or output code instructions. The logic circuit is configured to execute the code instructions, so that the method in the third aspect, the fifth aspect, the seventh aspect, or any possible implementation is performed.

According to a fourteenth aspect, an embodiment of this application provides a computer-readable storage medium. The computer-readable storage medium is configured to store a computer program. When the computer program runs on a computer, the method in the first aspect, the second aspect, the fourth aspect, the sixth aspect, or any possible implementation is performed.

According to a fifteenth aspect, an embodiment of this application provides a computer-readable storage medium. The computer-readable storage medium is configured to store a computer program. When the computer program runs on a computer, the method in the third aspect, the fifth aspect, the seventh aspect, or any possible implementation is performed.

According to a sixteenth aspect, an embodiment of this application provides a computer program product. The computer program product includes a computer program or computer code (or referred to as instructions). When the computer program product runs on a computer, the method in the first aspect, the second aspect, the fourth aspect, the sixth aspect, or any possible implementation is performed.

According to a seventeenth aspect, an embodiment of this application provides a computer program product. The computer program product includes a computer program or computer code (or referred to as instructions). When the computer program product runs on a computer, the method in the third aspect, the fifth aspect, the seventh aspect, or any possible implementation is performed.

According to an eighteenth aspect, an embodiment of this application provides a computer program. When the computer program runs on a computer, the method in the first aspect, the second aspect, the fourth aspect, the sixth aspect, or any possible implementation is performed.

According to a nineteenth aspect, an embodiment of this application provides a computer program. When the computer program runs on a computer, the method in the third aspect, the fifth aspect, the seventh aspect, or any possible implementation is performed.

According to a twentieth aspect, an embodiment of this application provides a communication system. The communication system includes a STA and an AP.

In a possible implementation, the STA is configured to perform the method in the first aspect or any possible implementation of the first aspect, and the AP is configured to perform the method in the third aspect or any possible implementation of the third aspect.

In a possible implementation, the STA is configured to perform the method in the second aspect or any possible implementation of the second aspect, and the AP is configured to perform the method in the third aspect or any possible implementation of the third aspect.

In a possible implementation, the STA is configured to perform the method in the first aspect, the second aspect, or any possible implementation, and the AP is configured to perform the method in the third aspect or any possible implementation of the third aspect.

In a possible implementation, the STA is configured to perform the method in the fourth aspect or any possible implementation of the fourth aspect, and the AP is configured to perform the method in the fifth aspect or any possible implementation of the fifth aspect.

In a possible implementation, the STA is configured to perform the method in the sixth aspect or any possible implementation of the sixth aspect, and the AP is configured to perform the method in the seventh aspect or any possible implementation of the seventh aspect.

### BRIEF DESCRIPTION OF DRAWINGS

FIG. 1 is a diagram of an architecture of a communication system according to an embodiment of this application;
FIG. 2 is a diagram of a TXOP sharing mechanism according to an embodiment of this application;
FIG. 3 is a schematic flowchart of a channel contention-based communication method according to an embodiment of this application;
FIG. 4 is a diagram of a structure of an MU-RTS frame according to an embodiment of this application;
FIG. 5a is a diagram of a scenario of a channel contention-based communication method according to an embodiment of this application;
FIG. 5b is a schematic flowchart of a channel contention-based communication method corresponding to FIG. 5a according to an embodiment of this application;
FIG. 5c is a diagram of a structure of an MU-RTS TXS TF frame according to an embodiment of this application;
FIG. 6a is a diagram of a scenario of a channel contention-based communication method according to an embodiment of this application;
FIG. 6b is a schematic flowchart of a channel contention-based communication method corresponding to FIG. 6a according to an embodiment of this application;
FIG. 6c is a diagram of a structure of an MU-RTS TXS TF frame according to an embodiment of this application;
FIG. 7a is a diagram of a scenario of a channel contention-based communication method according to an embodiment of this application;
FIG. 7b is a schematic flowchart of a channel contention-based communication method corresponding to FIG. 7a according to an embodiment of this application;
FIG. 7c is a diagram of a structure of an MU-RTS TXS TF frame according to an embodiment of this application;
FIG. 8a is a diagram of a scenario of a channel contention-based communication method according to an embodiment of this application;
FIG. 8b is a schematic flowchart of a channel contention-based communication method corresponding to FIG. 8a according to an embodiment of this application;
FIG. 8c is a diagram of a structure of an MU-RTS TXS TF frame according to an embodiment of this application;
FIG. 9a is a diagram of a scenario of a channel contention-based communication method according to an embodiment of this application;
FIG. 9b is a schematic flowchart of a channel contention-based communication method corresponding to FIG. 9a according to an embodiment of this application;
FIG. 9c is a diagram of a structure of an MU-RTS TXS TF frame according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

In the specification, claims, or accompanying drawings of this application, the terms "first", "second", and the like are intended only to distinguish between different objects but do not indicate a particular order. In addition, the terms "include", "comprise", and any variant thereof are intended to cover a non-exclusive inclusion. For example, a process, a method, a system, a product, or a device that includes a series of steps or units is not limited to the enumerated steps or units, but optionally further includes other unenumerated steps or units, or optionally further includes another inherent step or unit of the process, the method, the product, or the device.

An "embodiment" mentioned in this specification means that a particular feature, structure, or characteristic described with reference to this embodiment may be included in at least one embodiment of this application. The phrase shown in various locations in this specification may not necessarily mean a same embodiment, and is not an independent or optional embodiment exclusive from another embodiment. It is explicitly and implicitly understood by a person skilled in the art that embodiments described in the specification may be combined with another embodiment.

Terms used in the following embodiments of this application are merely intended to describe specific embodiments, but are not intended to limit this application. As used in the specification of this application and the appended claims, the singular expression "a", "an", "the", "the foregoing", "such a", or "this" is intended to also include a plural expression unless otherwise clearly indicated in the context. It should also be understood that, the term "and/or" used in this application indicates and includes any or all possible combinations of one or more associated listed items. For example, "A and/or B" may represent three cases: Only A exists, only B exists, and both A and B exist, where A and B may be singular or plural. The term "a plurality of" used in this application means two or more.

The technical solutions provided in this application may be applied to a WLAN system, for example, Wi-Fi. For example, the method provided in this application may be applied to the IEEE 802.11 series protocols, for example, the 802.11a/b/g protocol, the 802.11n protocol, the 802.11ac protocol, the 802.11 ax protocol, the 802.11be protocol, or a next-generation protocol. Examples are not listed one by one herein. The technical solutions provided in this application may be further applied to a wireless personal area network (wireless personal area network, WPAN) based on a UWB technology. For example, the method provided in this application may be applied to the IEEE 802.15 series protocols, for example, the 802.15.4a protocol, the 802.15.4z protocol, the 802.15.4ab protocol, or a future generation UWB WPAN protocol. Examples are not listed one by one herein. The technical solutions provided in this application may be further applied to other types of communication systems, for example, may be an Internet of things (internet of things, IoT) system, a vehicle to X (vehicle to X, V2X) system, or a narrowband Internet of things (narrowband internet of things, NB-IoT) system, and are applied to devices in the vehicle to X, Internet of things nodes, sensors, or the like in the Internet of things (internet of things, IoT), smart cameras, smart remote controls, smart water or electricity meters, or the like in a smart home, sensors in a smart city, and the like. The technical solutions may be further applied to a long term evolution (long term evolution, LTE) system, a 5th generation (5th-generation, 5G) communication system, a new communication system (for example, 6G) emerging in future communication development, and the like.

Although embodiments of this application mainly use a WLAN as an example, and are particularly applied to a network that complies with the IEEE 802.11 series standards, for example, a system that supports Wi-Fi 7 and an extremely high throughput (extremely high throughput, EHT), or a system that supports Wi-Fi 8, ultra high reliability (ultra high reliability, UHR), and ultra high reliability and throughput (ultra high reliability and throughput, UHRT). This is used as an example for description. A person skilled in the art easily understands that aspects in this application may be extended to other networks using various standards or protocols, for example, Bluetooth (Bluetooth), a high performance radio LAN (high performance radio LAN, HIPERLAN) (a wireless standard similar to the IEEE 802.11 standard, which is mainly used in Europe), a wide area network (WAN), or another network that is known currently or developed in the future. Therefore, regardless of a used coverage area and wireless access protocol, various aspects provided in this application are applicable to any suitable wireless network.

The method provided in this application may be implemented by a communication apparatus in a wireless communication system. For example, the communication apparatus may be an access point (access point, AP) or a station (station, STA).

The access point is an apparatus having a wireless communication function, supports communication or sensing by using a WLAN protocol, and has a function of communicating with or sensing another device (for example, a station or another access point) in a WLAN network. Certainly, the access point may further have a function of communicating with or sensing another device. Alternatively, the access point is equivalent to a bridge connecting a wired network and a wireless network, and is mainly used to connect wireless network clients together and then connect the wireless network to the Ethernet. In the WLAN system, the access point may be referred to as an access point station (AP STA). The apparatus having the wireless communication function may be an entire device, or may be a chip or a processing system installed on an entire device. The device on which the chip or the processing system is installed may implement the method and the function in embodiments of this application under control of the chip or the processing system. The AP in embodiments of this application is an apparatus that provides a service for the STA, and may support the 802.11 series protocols, a subsequent protocol, or the like. For example, the access point may be an access point for a terminal (for example, a mobile phone) to access a wired (or wireless) network, and is mainly deployed at home, inside a building, and inside a campus. A typical coverage radius is tens of meters to hundreds of meters. Certainly, the access point may alternatively be deployed outdoors. For another example, the AP may be a communication entity such as a communication server, a router, a switch, or a network bridge. The AP may include various forms of macro base stations, micro base stations, relay stations, and the like. Certainly, the AP may alternatively be a chip and a processing system in these various forms of devices, to implement the methods and the functions in embodiments of this application.

The station is an apparatus having a wireless communication function, supports communication or sensing by using the WLAN protocol, and has a capability of communicating with or sensing another station or access point in the WLAN network. In the WLAN system, the station may be referred to as a non-access point station (non-access point station, non-AP STA). For example, the STA is any user communication device that allows a user to communicate with or sense an AP to communicate with the WLAN. The apparatus having a wireless communication function may be an entire device, or may be a chip, a processing system, or the like installed on an entire device. A device on which these chips or processing systems are installed may implement the methods and functions in embodiments of this application under control of the chips or the processing systems. For example, the station may be a wireless communication chip, a wireless sensor, or a wireless communication terminal; and may also be referred to as a user. For another example, the station may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, a vehicle-mounted communication device supporting a Wi-Fi communication function, or a computer supporting a Wi-Fi communication function.

The WLAN system can provide high-rate and low-latency transmission. With continuous evolution of WLAN application scenarios, the WLAN system is to be applied to more scenarios or industries, for example, the Internet of things industry, the vehicle to X industry, the banking industry, enterprise offices, stadiums and exhibition halls, concert halls, hotel rooms, dormitories, wards, classrooms, shopping malls and supermarkets, squares, streets, workshops, and warehouses. Certainly, a device (for example, an access point or a station) that supports WLAN communication or sensing may be a sensor node (for example, a smart water meter, a smart electricity meter, or a smart air detection node) in a smart city, a smart device in a smart home (for example, a smart camera, a projector, a display, a television, a speaker, a refrigerator, or a washing machine), a node in the Internet of things, an entertainment terminal (for example, a wearable device such as augmented reality (augmented reality, AR) or virtual reality (virtual reality, VR)), a smart device in a smart office (for example, a printer, a projector, a loudspeaker, or a speaker), a vehicle to X device in the vehicle to X, infrastructure in a daily life scenario (for example, a vending machine, a self-service navigation console in a shopping mall or supermarket, a self-service cash register device, or a self-service ordering machine), a device in a large stadium or a music venue, or the like. For example, for example, the access point and the station each may be a device used in the vehicle to X, an Internet of things node or a sensor in the Internet of things, a smart camera, a smart remote control, and a smart water or electricity meter in a smart home, or a sensor in a smart city. Specific forms of the STA and the AP are not limited in embodiments of this application, and are merely examples for description herein.

For example, a communication system to which the method provided in this application may be applied may include an access point and a station. For example, this application may be applied to a scenario in which the AP communicates with or senses the STA in the WLAN. Optionally, the AP may communicate with or sense a single STA, or the AP simultaneously communicates with or senses a plurality of STAs. Specifically, communication or sensing between the AP and the plurality of STAs may be further divided into downlink transmission of simultaneously sending signals by the AP to the plurality of STAs and uplink transmission of sending signals by the plurality of STAs to the AP. The WLAN communication protocol may be supported between the AP and the STA. The communication protocol may include the IEEE 802.11 series protocols, for example, may be applied to the 802.11be standard and may be certainly applied to a standard after 802.11be.

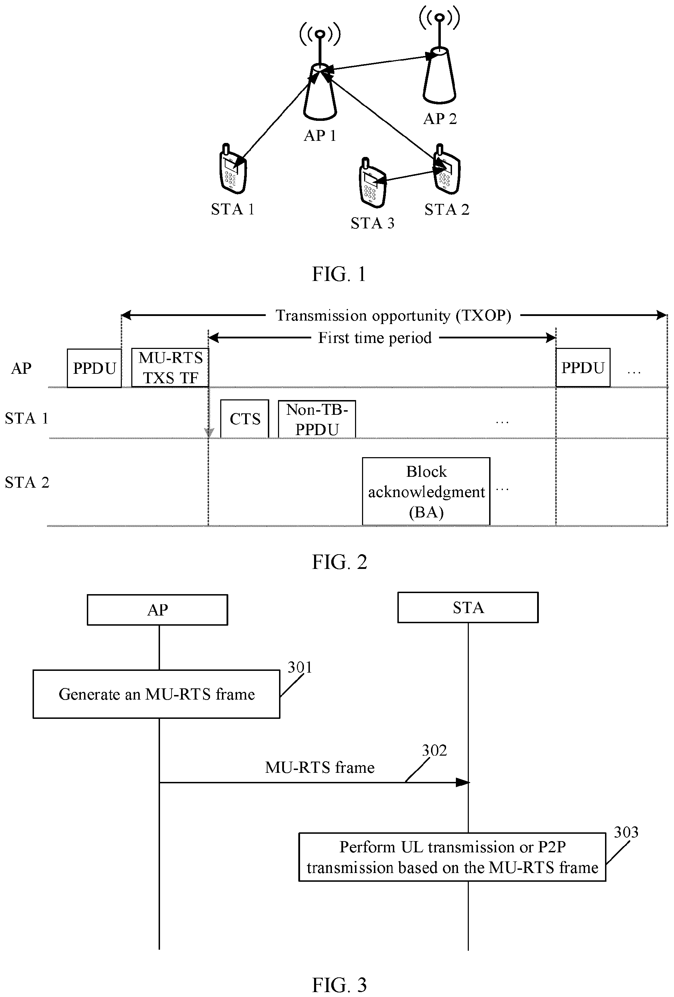

FIG. 1 is a diagram of an architecture of a communication system according to an embodiment of this application. The communication system may include one or more APs and one or more STAs. FIG. 1 shows two access points such as an AP 1 and an AP 2, and three stations such as a STA 1, a STA 2, and a STA 3. It may be understood that the one or more APs may communicate with the one or more STAs. Certainly, the APs may communicate with each other, and the STAs may communicate with each other.

It may be understood that, in FIG. 1, an example in which the STA is a mobile phone and the AP is a router is used, but this does not mean that types of the AP and the STA in this application are limited. In addition, FIG. 1 shows only two APs and three STAs as an example. There may be more or less APs or STAs. This is not limited in this embodiment of this application.

Currently, there is a TXOP sharing (TXOP sharing, TXS) mechanism. An AP serving as a TXOP holder may allocate a part of a time resource (namely, a first time period in FIG. 2) in a remaining TXOP time period to only one first station (for example, a STA 1 shown in FIG. 2), the first station may perform P2P transmission with a second station (for example, a STA 2 shown in FIG. 2) or send data to the AP in the allocated time. As shown in FIG. 2, the AP serving as the TXOP holder sends a multi-user (multiple users, MU) request to send (request to send, RTS) (MU-RTS) TXS trigger frame (trigger frame, TF), and a first station that receives the MU-RTS TXS TF may reply to the AP with a clear to send (clear to send, CTS) frame. The first station performs transmission in the first time period after completing sending of the CTS and waiting for a short inter-frame space (short inter-frame space, SIFS) duration, and ends transmission before the first time period ends. By using this mechanism, a collision caused by channel contention of the first station can be reduced, thereby improving system efficiency. A P2P link used for P2P transmission shown in this embodiment of this application may be established by two STAs according to a tunneled direct link setup (tunneled direct link setup, TDLS) or another P2P protocol. In other technical descriptions, P2P may also be referred to as D2D, TDLS, or the like. Essence of these is the same. A specific manner of P2P is not limited in embodiments of this application.

However, in the foregoing TXS mechanism, the AP is allowed to share a period of time of the TXOP with only one STA, causing low system efficiency.

In view of this, embodiments of this application provide a channel contention-based communication method and apparatus, to implement concurrency of a plurality of STAs, thereby improving system efficiency (which may also be understood as improving a spatial reuse capability of a system). For example, according to embodiments of this application, the TXOP may be shared with a plurality of users to support simultaneous concurrent transmission. This not only improves a spatial reuse capability, but also effectively improves system communication efficiency.

FIG. 3 is a schematic flowchart of a channel contention-based communication method according to an embodiment of this application. For example, the method may be applied to the communication system shown in FIG. 1. As shown in FIG. 3, the method includes the following steps.

301: An AP generates an MU-RTS frame.

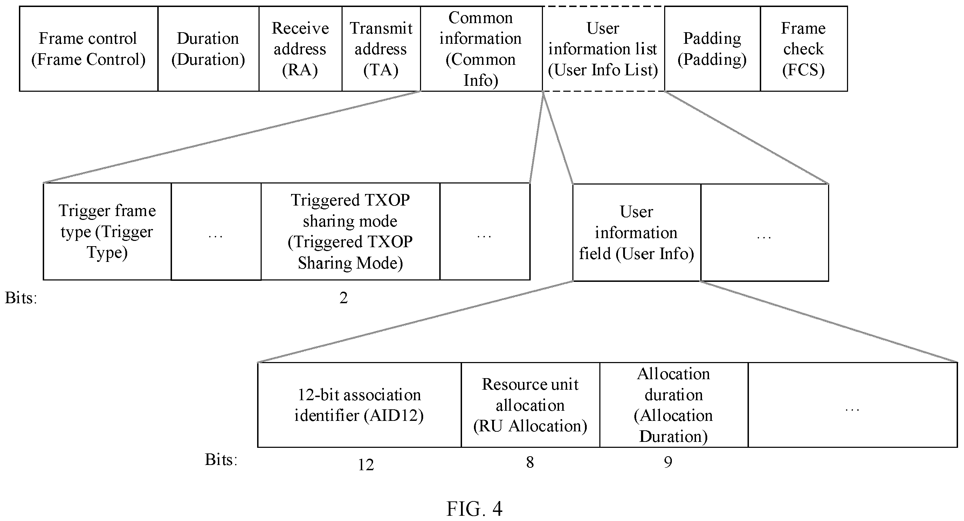

The MU-RTS frame may include at least one of the following fields (field): frame control (frame control), duration (duration), a receive address (receive address, RA), a transmit address (transmission address, TA), common information (common info), a user information list (user info list), padding (padding), and a frame check sequence (frame check sequence, FCS). FIG. 4 is a diagram of a structure of an MU-RTS frame according to an embodiment of this application. In this embodiment of this application, the MU-RTS frame may include one user information field, or include two user information fields, or include more than two user information fields, or not include any user information field. For descriptions of a quantity of user information fields, refer to Embodiment 1 to Embodiment 5 below.

It may be understood that the MU-RTS frame shown in this embodiment of this application may include an MU-RTS TXS trigger frame and the like. A specific name of the MU-RTS frame is not limited in this embodiment of this application.

For example, the common information field may include at least one of the following fields: a trigger frame type (trigger type) and a triggered TXOP sharing mode. The triggered TXOP sharing mode field may indicate a TXOP sharing mode. For example, when a value carried in the triggered TXOP sharing mode field is 1, it may indicate that the station can perform only uplink transmission in the first time period. For another example, when a value carried in the triggered TXOP sharing mode field is 2, it indicates that the station can perform UL transmission or P2P transmission in the first time period. When the value carried in the triggered TXOP sharing mode field is 2, it indicates that the station can perform UL transmission or P2P transmission in the first time period. This may be understood as follows: First, if one station performs UL transmission or P2P transmission in the first time period, for example, in FIG. 2, it indicates that a first station may perform UL transmission or P2P transmission in the first time period. Second, one station performs UL transmission or P2P transmission in the first time period, and at least one station performs P2P transmission in the first time period. For another example, when a value carried in the triggered TXOP sharing mode field is 3, the triggered TXOP sharing mode field may be understood as follows: Third, at least one station may perform P2P transmission in the first time period. Fourth, one station may perform UL transmission or P2P transmission in the first time period, and at least one station may perform P2P transmission. For the second understanding manner and the fourth understanding manner, it may be considered that a meaning of the triggered TXOP sharing mode field carrying 2 is the same as a meaning of the field carrying 3.

A meaning indicated by "the triggered TXOP sharing mode field carrying 3" shown above is merely an example, and should not be construed as a limitation on this embodiment of this application. It may be understood that a value carried in a specific field shown in this embodiment of this application may also be understood as a value of the specific field. For ease of distinguishing between different understanding manners (for example, similar descriptions such as first to sixth), different numbers are used for distinguishing in embodiments of this application. However, this does not indicate that these numbers are associated with each other, or does not indicate that these numbers are in an order.

For example, the user information field may include at least one of the following fields: an association identifier (association identifier, AID), resource unit (resource unit, RU) allocation (allocation), and allocation duration (allocation duration). The association identifier field may indicate a station corresponding to the user information field. For example, as shown in FIG. 4, the association identifier field may be used to carry a 12-bit association identifier (AID12) of the station corresponding to the user information field. For another example, the association identifier field may be used to carry a P2P identifier, and the P2P identifier may correspond to one P2P transmitting party and one P2P receiving party. It may be understood that the P2P identifier carried in the association identifier field is different from an AID of any STA. In this way, it can be ensured that a station that obtains the P2P identifier can determine, based on the P2P identifier, whether the AP allocates the first time period to the station, or determine, based on the P2P identifier, whether the station can use this TXS opportunity. The allocation duration field may indicate the first time period. It may be understood that whether first time periods corresponding to stations are the same is not limited in embodiments of this application.

For ease of description, embodiments of this application are shown by using a "field" as an example, and a "field", a "subfield", and the like are not specifically distinguished. The field shown in this embodiment of this application may also be referred to as a field.

302: The AP sends the MU-RTS frame, and correspondingly, the STA receives the MU-RTS frame.

303: The STA performs UL transmission or P2P transmission in a first time period based on the MU-RTS frame.

Step 303 may be implemented in the following manners:

### Implementation 1

The STA ignores, based on the MU-RTS frame, a NAV configured by the AP, performs channel contention in the first time period, and performs P2P transmission in the first time period in a case of channel contention.

Usually, the STA is allowed to access a channel only when both physical carrier sense and virtual carrier sense are idle, to send a radio frame. Physical carrier sense may be implemented through sensing energy on a channel and a radio frame signal. For example, when received energy or strength of a received radio frame is less than a specific threshold, it may be considered that physical carrier sense is idle; or otherwise, physical carrier sense is busy. Virtual carrier sense may be implemented by setting a NAV. When the NAV is not 0, virtual carrier sense is busy. When a value of the NAV is 0, virtual carrier sense is idle. Usually, after correctly receiving a radio frame, the STA may update the NAV based on a duration field in the radio frame. When a receive address carried in a receive address field in the radio frame is a medium access control (medium access control, MAC) address of the STA, the STA does not update the NAV. For a radio frame whose receive address is not a MAC address of the STA, when a value carried in the duration field in the radio frame is greater than a current NAV of the STA, the NAV needs to be updated based on the duration field.

When the AP shares a period of time (for example, the first time period) in the TXOP with at least two STAs, different STAs may mutually receive radio frames of other STAs. If the STA does not ignore the NAV configured by the AP, even if the AP shares the first time period with the STA, due to a manner of setting the NAV, the STA still cannot perform channel contention, and therefore cannot perform P2P transmission. Therefore, in this embodiment of this application, the NAV configured by the AP may be ignored, so that it can be ensured that the STA can perform channel contention to perform P2P transmission.

The NAV may include at least one of the following: a basic NAV (basic NAV) and an intra-basic service set (basic service set, BSS) NAV (intra-BSS NAV). The intra-BSS NAV may be updated by using an intra-BSS PPDU. A basic NAV may be updated by using an inter-BSS PPDU or a PPDU that cannot be determined as an intra-BSS PPDU or an inter-BSS PPDU. In brief, the inter-BSS PPDU is a PPDU sent by a STAfrom the inter-BSS, and the intra-BSS PPDU is a PPDU sent by a STA from the intra-BSS. A specific manner of identifying the inter-BSS PPDU and the intra-BSS PPDU is not limited in this embodiment of this application. The STA may ignore the intra-BSS NAV configured by the AP.

Optionally, the STA may ignore, based on a value of the triggered TXOP sharing mode field in the MU-RTS frame, the NAV configured by the AP. For example, when the value carried in the triggered TXOP sharing mode field in the MU-RTS frame is 3, the STA may ignore the NAV configured by the AP. For another example, according to the foregoing second understanding manner, when the value carried in the triggered TXOP sharing mode field is 2, the STA may ignore the NAV configured by the AP.

Optionally, the STA may ignore, based on the quantity of user information fields included in the MU-RTS frame, the NAV configured by the AP. For example, if the quantity of user information fields is greater than or equal to 2, the STA may ignore the NAV configured by the AP. For another example, if the quantity of user information fields is equal to 0, the STA may ignore the NAV configured by the AP.

It may be understood that, if the STA can ignore the NAV configured by the AP, it indicates that the STA has learned that the STA is allowed to perform a TXS_PD-based SR mechanism. The TXS_PD-based SR mechanism may be referred to as a mechanism for sharing the first time period with a plurality of STAs, an SR mechanism that allows TXOP sharing, a mechanism that supports concurrent transmission of a plurality of users, or the like. Examples are not listed one by one herein. A name of the TXS_PD-based SR mechanism shown in this embodiment of this application is merely an example. The name is not limited. For example, the TXS_PD-based SR mechanism may be understood as at least one of the following: The AP is allowed to share the period of time (for example, the first time period) in the TXOP with a station configured to perform UL transmission or P2P transmission and with at least one station configured to perform P2P transmission; and the AP is allowed to share the period of time in the TXOP with at least two stations configured to perform P2P transmission. For specific descriptions of the mechanism, refer to Embodiment 1 to Embodiment 5 below.

Optionally, the STA may ignore, based on the common information field in the MU-RTS frame, the NAV configured by the AP. For example, the common information field may include a second indication field. The second indication field may indicate whether TXOP sharing packet detect is allowed, or the second indication field may indicate whether TXOP sharing spatial reuse (TXS SR) is allowed, or the second indication field may indicate whether a period of time in the TXOP is allowed to be shared with a plurality of STAs, or the second indication field may indicate whether concurrent transmission of a plurality of users is supported, or the second indication field may indicate whether the TXS_PD-based SR mechanism is allowed. The second indication field may also be referred to as a field indicating whether TXS_PD is allowed, a TXS SR allowed field, or the like. A specific name of the second indication field is not limited in this embodiment of this application. For example, the second indication field may occupy 1 bit, a value 0 carried in the second indication field may indicate that TXS_PD-based SR is not allowed in the first time period, and a value 1 carried in the second indication field may indicate that TXS_PD-based SR is allowed in the first time period. If TXS_PD-based SR is allowed in the first time period, it indicates that the STA may share the first time period, and may perform channel contention in the first time period. Alternatively, the STA may ignore, based on the second indication field, the NAV configured by the AP. If TXS_PD-based SR is not allowed in the first time period, it indicates that concurrent transmission of a plurality of users is not supported. Therefore, the STA receiving the MU-RTS frame needs to perform transmission according to the method shown in FIG. 2 or an overlapping basic service set (overlapping basic service set, OBSS) packet detect (OBSS packet detect, OBSS_PD)-based spatial reuse (spatial reuse) mechanism.

It may be understood that ignoring the NAV configured by the AP in this embodiment of this application may be equivalent to the NAV configured by the AP being 0, or equivalent to a case in which the STA may further perform a subsequent operation based on the NAV configured by the AP being 0.

For example, that the STA performs channel contention in the first time period includes the following implementations:
Fifth, when the PPDU is received, backoff is performed based on the received power of the PPDU and a first CCA threshold.

Usually, in addition to the radio frame sent by the AP, the STA may further receive the PPDU sent by the STA in the intra-BSS, or receive the PPDU sent by the STA in the inter-BSS, or receive the PPDU that cannot be determined as a PPDU sent by a STA in an intra-BSS or a PPDU sent by a STA in an inter-BSS.

Optionally, when the PPDU is the intra-BSS PPDU, the STA may perform backoff based on the received power of the PPDU and the first CCA threshold. In this implementation, when the PPDU is not the intra-BSS PPDU, the STA may determine, based on the received power of the PPDU and the CCA_PD threshold, whether the channel is idle or busy. If the received power of the PPDU is greater than the CCA_PD threshold, the STA may consider that the channel is busy. If the received power of the PPDU is less than or equal to the CCA_PD threshold, the STA may consider that the channel is idle. When the channel is idle, the STA may perform P2P transmission.

Optionally, when the PPDU is the intra-BSS PPDU, the inter-BSS PPDU, or the PPDU that cannot be determined as an intra-BSS PPDU or an inter-BSS PPDU, the STA may perform backoff based on the received power of the PPDU and the first CCA threshold. In this implementation, before performing backoff, the STA may determine a type of the PPDU. Alternatively, because the type of the PPDU may be the intra-BSS PPDU, the inter-BSS PPDU, or the PPDU that cannot be determined as an intra-BSS PPDU or an inter-BSS PPDU, this may be equivalent to a case in which the type of the PPDU is not determined before the STA performs backoff.

The first CCA threshold is greater than or equal to the CCA_PD threshold, the CCA_PD threshold may be equal to -82 dBm, and the first CCA threshold may be equal to -82 dBm, -72 dBm, -68 dBm, or the like. Examples are not listed one by one herein. The first CCA threshold is less than or equal to a second CCA threshold. The second CCA threshold may be equal to -62 dBm. A specific value of the second CCA threshold may be determined based on a threshold used when it is determined through physical carrier sense that a channel is busy. For example, the second CCA threshold may be referred to as a CCA _ED threshold. The CCA_PD threshold may be defined in a standard. For a use scenario of the CCA_PD threshold, refer to the foregoing descriptions.

Optionally, the AP may add the value of the first CCA threshold to a beacon (beacon) frame or a probe response (probe response) frame. The value of the first CCA threshold may be a separate new element (element). Alternatively, a spatial reuse parameter set element (spatial reuse parameter set element) may be reused, a first CCA threshold field is added to the element, and the first CCA threshold is indicated to the STA by using the first CCA threshold field. Optionally, the first CCA threshold may be alternatively configured by the STA. The first CCA threshold may be referred to as a TXS_PD threshold. A specific name of the first CCA threshold is not limited in this embodiment of this application.

Performing backoff based on the received power of the PPDU and the first CCA threshold includes: further performing backoff if the received power of the PPDU is less than or equal to the first CCA threshold; or stopping backoff if the received power of the PPDU is greater than the first CCA threshold.

If the received power of the PPDU is less than or equal to the first CCA threshold, the STA may consider that the channel is idle, ignore the PPDU received by the STA or not update the NAV based on the duration field in the PPDU, and further perform a backoff process. If the STA performs backoff to 0 in the first time period, the STA may perform P2P transmission before the first time period ends. It may be understood that, if the STA obtains a transmission opportunity in the first time period, the STA needs to reduce a maximum transmit power of the STA. For example, when the received power of the PPDU is greater than or equal to the CCA_PD threshold and less than or equal to the first CCA threshold, the maximum transmit power may be reduced to Pₘₐₓ₀-(Pᵣ₋CCA), where Pₘₐₓ₀ is the maximum transmit power allowed by the regulations, Pᵣ is the received power of the PPDU, and CCA is the first CCA threshold. For another example, when the received power of the PPDU is less than or equal to the CCA_PD threshold, the maximum transmit power may be Pₘₐₓ₀.

If the received power of the PPDU is greater than the first CCA threshold, the STA may consider that the channel is busy, and cannot ignore the PPDU or the duration field in the PPDU. For example, the STA may update the NAV based on the duration field in the PPDU. After the NAV is updated, because the NAV is not equal to 0, the STA considers that the channel is busy, that is, stops backoff.

Sixth, when the PPDU is not received, channel contention is performed based on the second CCA threshold. If energy of the channel is greater than the second CCA threshold, it is considered that the channel is busy. If energy of the channel is less than or equal to the second CCA threshold, it is considered that the channel is idle. When the channel is idle, the STA may perform P2P transmission.

### Implementation 2

The STA performs UL transmission or P2P transmission in the first time period based on the MU-RTS frame, and does not need to perform channel contention. In other words, when a specific STA determines based on the MU-RTS frame that the STA can perform UL transmission or P2P transmission, the STA may initiate UL transmission or P2P transmission without performing channel contention. For example, the STA may wait for an SIFS after a CTS is sent, and may perform UL transmission or P2P transmission.

Based on the foregoing implementation 1 and implementation 2, the AP may share the period of time (for example, the first time period) in the TXOP with at least two STAs. In a possible implementation, one of the at least two STAs may perform UL transmission or P2P transmission in the first time period (for example, the foregoing implementation 2), and at least one of the at least two STAs may perform P2P transmission in the first time period (for example, the foregoing implementation 1). In this embodiment of this application, the AP shares the first time period with a STA that can be used for UL transmission or P2P transmission and a STA that can be used only for P2P transmission. In this way, it can be ensured as much as possible that at least one STA can successfully perform transmission, thereby ensuring system efficiency. In addition, more stations can be allowed to share the first time period as much as possible, to ensure concurrent transmission of a plurality of users, thereby improving system efficiency. In another possible implementation, the at least two STAs perform P2P transmission in the first time period (for example, the foregoing implementation 1). In this embodiment of this application, the AP shares the first time period with a plurality of STAs, and the plurality of STAs may perform P2P transmission. Fairness of the plurality of STAs is ensured through maintaining transmission consistency of the plurality of STAs (that is, all performing P2P transmission). This can not only effectively reduce a collision caused by channel contention of the plurality of STAs, but also improve communication efficiency of a system.

In this embodiment of this application, the AP may share the period of time in the TXOP with the plurality of STAs. In this way, the period of time in the TXOP is effectively used, and a spatial reuse capability is effectively improved through sharing the period of time with the plurality of STAs, thereby improving communication efficiency of the system.

Currently, there is still an overlapping basic service set (overlapping basic service set, OBSS) packet detect (OBSS packet detect, OBSS_PD) spatial reuse (spatial reuse) mechanism. Before the STA receives the PPDU and updates the NAV, when NAV=0 and the received PPDU is the inter-BSS PPDU or the PPDU that cannot be determined as an intra-BSS PPDU or an inter-BSS PPDU, the STA can perform backoff based on the received power of the PPDU and the OBSS_PD threshold. Based on this mechanism, even if the AP shares the period of time in the TXOP with the plurality of STAs, if the NAV is not equal to 0 before the STA receives the PPDU and does not update the NAV based on the PPDU, the STA cannot perform backoff and cannot implement UL transmission or P2P transmission. Therefore, by using the OBSS_PD-based SR mechanism, the period of time in the TXOP cannot be shared with the plurality of STAs for use. In this case, the STA has set the NAV, and a plurality of different P2P transmissions may be mutually determined as intra-BSS transmissions. An OBSS_PD condition is not met.

The TXS_PD-based SR mechanism may take effect in the first time period of the TXS mechanism. The OBSS_PD-based SR mechanism may take effect at any moment. In other words, in this embodiment of this application, sending of the PPDU of TXS_PD-based SR and a corresponding response frame cannot exceed the first time period. The TXS_PD-based SR mechanism may take effect for the PPDU that is of the intra-BSS (intra-BSS) and that is received by the STA; or the PPDU received from the intra-BSS (intra-BSS), the PPDU received from the inter-BSS (inter-BSS), or the PPDU that cannot be determined as an intra-BSS PPDU or an inter-BSS PPDU. The OBSS_PD-based SR mechanism takes effect only for the PPDU from the inter-BSS (inter-BSS) or the PPDU that cannot be determined as an intra-BSS PPDU or an inter-BSS PPDU. A prerequisite for the OBSS_PD-based SR mechanism to take effect is that the PPDU includes the inter-BSS PPDU, or includes the PPDU that cannot be determined as an intra-BSS PPDU or an inter-BSS PPDU. However, when the AP shares the period of time in the TXOP with the plurality of STAs, most PPDUs received by the STAs are intra-BSS PPDUs. Therefore, the OBSS_PD-based SR mechanism greatly limits a possibility that the AP shares the period of time in the TXOP with the plurality of STAs for use, and limits a possibility of concurrent transmission. For the TXS_PD-based SR mechanism, the type of the PPDU is not limited. For example, even if the STA receives the PPDU from the intra-BSS, the STA can still perform P2P transmission, thereby ensuring feasibility of the TXS_PD-based SR mechanism. In this way, a plurality of STAs can implement concurrent transmission.

It may be understood that the first CCA threshold shown in this embodiment of this application may be the same as or different from the OBSS_PD threshold. This is not limited in this embodiment of this application.

The following describes the method shown in FIG. 3 with reference to a specific structure of the MU-RTS frame.

### Embodiment 1

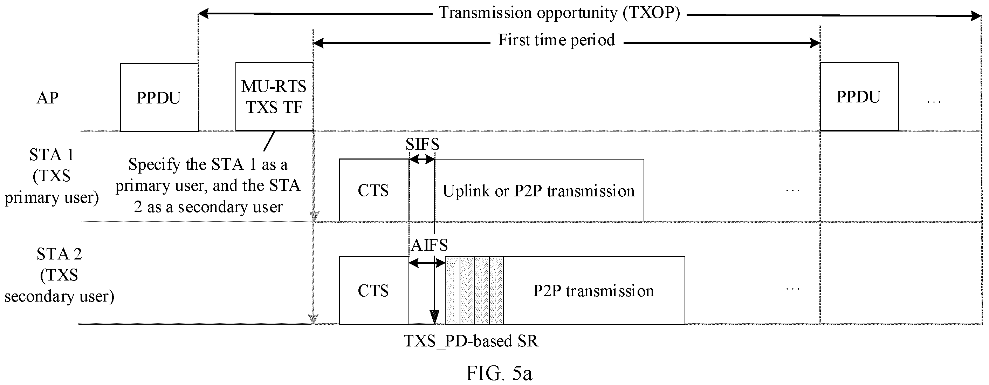

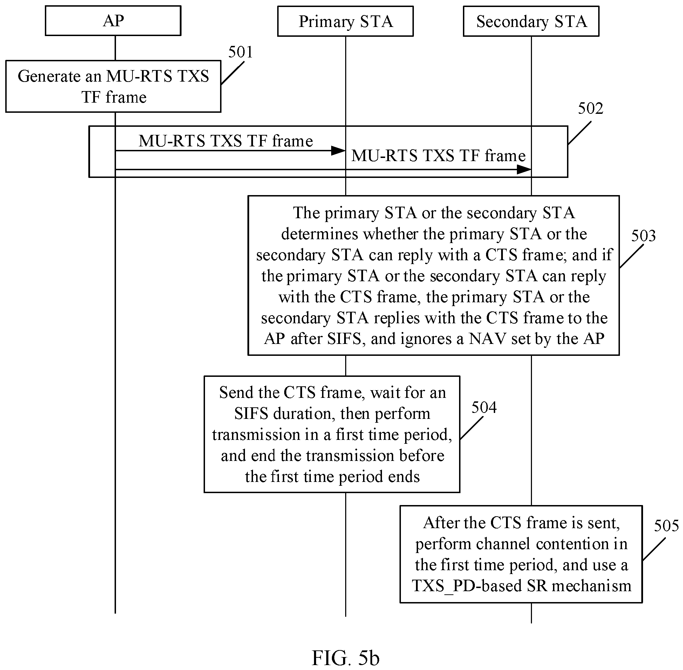

FIG. 5a is a diagram of a scenario of a channel contention-based communication method according to an embodiment of this application. FIG. 5b is a schematic flowchart of a channel contention-based communication method corresponding to FIG. 5a according to an embodiment of this application. As shown in FIG. 5b, the method includes the following steps.

501: An AP serving as a TXOP holder generates an MU-RTS TXS TF frame.

502: The AP sends the MU-RTS TXS TF frame. Correspondingly, a primary STA receives the MU-RTS TXS TF frame, and a secondary STA receives the MU-RTS TXS TF frame.

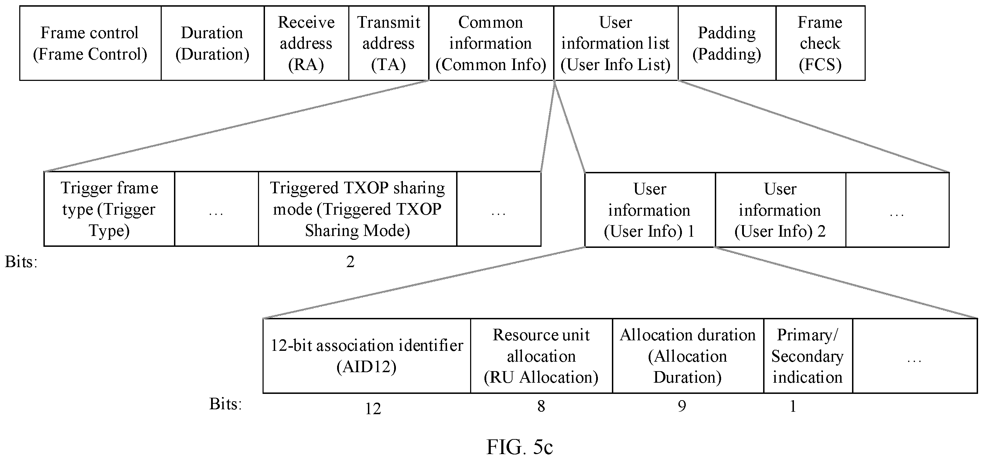

FIG. 5c is a diagram of a structure of an MU-RTS TXS TF frame according to an embodiment of this application. An allocation duration field may indicate a length of a first time period. A value carried in a trigger TXOP sharing mode field in the frame may be 2 or 3. The frame may include at least two user information fields, and each user information field corresponds to one STA. In other words, the AP allocates the first time period to the indicated STA. For descriptions of an association identifier field in the user information field, refer to the descriptions of step 301 in FIG. 3. Details are not described herein again. In this embodiment of this application, in the MU-RTS TXS TF frame, one user information field corresponds to the primary STA (which may also be understood as indicating the primary STA), and at least one user information field corresponds to the secondary STA (which may also be understood as corresponding to the secondary STA). As shown in FIG. 5a, a STA 1 may be understood as a primary STA or a TXS primary user, and a STA 2 may be understood as a secondary STA or a TXS secondary user.

Optionally, the MU-RTS TXS TF frame may not include a primary/secondary indication field. A station that receives the MU-RTS TXS TF frame may determine, based on an order of a user information field corresponding to the station in a user information list field, whether the station is a primary STA or a secondary STA. For example, a user information field corresponding to the primary STA may be located at a 1^{st} user information field in the MU-RTS TXS TF frame, and a user information field corresponding to the secondary STA may be located at a 2^{nd} user information field and a user information field following the 2^{nd} user information field in the MU-RTS TXS TF frame. This may also be understood as a case in which the user information field corresponding to the secondary STA is located at a non-1^{st} user information field in the MU-RTS TXS TF frame. For example, the STA may determine, based on the order of the user information field corresponding to the STA, that the STA is the primary STA. Therefore, the STA may perform UL transmission or P2P transmission in the first time period. For another example, the STA may determine, based on the order of the user information field corresponding to the STA, that the STA is the secondary STA. Therefore, the STA may perform P2P transmission in the first time period.

Optionally, the user information field may include a primary/secondary indication field, and the primary/secondary indication field indicates that a corresponding station is a primary station or a secondary station. For example, when a value carried in the primary/secondary indication field is 0, it indicates that the STA corresponding to the user information field is a secondary STA. This may be alternatively understood as a case in which the STA corresponding to the user information field may perform P2P transmission in the first time period. For another example, when a value carried in the primary/secondary indication field is 1, it indicates that the STA corresponding to the user information field is a primary STA. This may be alternatively understood as a case in which the STA corresponding to the user information field may perform UL transmission or P2P transmission in the first time period.

The value and the corresponding meaning of the primary/secondary indication field shown herein are merely examples. For example, when the value carried in the primary/secondary indication field is 0, it may indicate that the STA corresponding to the user information field is a primary STA; and when the value carried in the primary/secondary indication field is 1, it may indicate that the STA corresponding to the user information field is a secondary STA.

As shown in FIG. 5c, the primary/secondary indication field may occupy 1 bit. The primary/secondary indication field may be an original reserved field in the MU-RTS TXS TF frame, or the like. A location of the primary/secondary indication field is not limited in this embodiment of this application. It may be understood that the primary/secondary indication field may also be referred to as a TXS primary user (TXS Primary User) field or a TXS secondary user field. In actual use, the AP may allocate only one primary STA in the MU-RTS TXS TF frame, and other remaining STAs are all secondary STAs.

In this embodiment of this application, the primary STA or the secondary STA may learn, based on the primary/secondary indication field in the corresponding user information field, that the primary STA or the secondary STA supports a TXS_PD-based SR mechanism.

503: The primary STA or the secondary STA determines whether the primary STA or the secondary STA can reply with a CTS frame. If the primary STA or the secondary STA can reply with the CTS frame, the primary STA or the secondary STA replies with the CTS frame to the AP after SIFS, and ignores a NAV configured by the AP.

For example, if a physical carrier sense result of the primary STA or the secondary STA is that a channel is idle, and a basic NAV is equal to 0, the primary STA or the secondary STA may reply with the CTS frame. If the basic NAV is not 0, the primary STA or the secondary STA may not reply with the CTS frame even if the physical carrier sense result is that the channel is idle.

For a specific manner in which the primary STA or the secondary STA ignores the NAV configured by the AP, refer to the descriptions of the foregoing implementation 1. Details are not described herein again. For example, the NAV configured by the AP is ignored based on a value of a triggered TXOP sharing mode field; or the NAV configured by the AP is ignored based on a quantity (for example, greater than or equal to two) of user information fields included in the MU-RTS TXS TF frame. In addition, the primary STA or the secondary STA may further ignore, based on the primary/secondary indication field in the user information field corresponding to the primary STA or the secondary STA, the NAV configured by the AP. For example, the user information field includes the primary/secondary indication field. It indicates that the AP allocates the first time period to a plurality of STAs. Because the plurality of STAs perform channel contention in the first time period, this may be equivalent to a case in which the primary STA or the secondary STA learns that the NAV configured by the AP needs to be ignored.

504: The primary STA sends the CTS frame, waits for an SIFS duration, then performs transmission in the first time period, and ends the transmission before the first time period ends.

It may be understood that the primary STA may perform UL transmission or may perform P2P transmission.

505: After sending the CTS frame, the secondary STA performs channel contention in the first time period, and uses the TXS_PD-based SR mechanism.

For descriptions of step 505, refer to the descriptions of the implementation 1 in FIG. 3. Details are not described herein again. It may be understood that a gray rectangular box in FIG. 5a represents a slot occupied by backoff. For example, if one rectangular box represents one slot, FIG. 5a may indicate that the STA 2 uses four slots for backoff. After arbitration interframe space (arbitration interframe space, AIFS) and four slots after the CTS frame is sent, the STA 2 performs P2P transmission. Usually, one slot (aSlotTime) may be 9 µs, one SIFS duration (for example, aSIFSTime) may be 16 µs, and one AIFS duration AIFS=AIFSN*aSlotTime+aSIFSTime, where AIFSN may be greater than or equal to 2.

It may be understood that FIG. 5a to FIG. 5c show two STAs merely as examples, that is, one primary STA and one secondary STA. In specific implementation, more secondary STAs may be further included. For specific implementation of these secondary STAs, refer to the secondary STA shown in FIG. 5a and FIG. 5b. Examples are not listed one by one in this embodiment of this application.

In this embodiment of this application, by distinguishing the primary station or the secondary station, it can be preferentially ensured that the primary station can implement transmission, and a collision caused by channel contention of the plurality of STAs can be reduced as much as possible. Different secondary stations may access a channel through channel contention, to perform P2P transmission. Therefore, the first time period is used as much as possible, to ensure that resources can be effectively used. In addition, concurrent transmission is further supported, thereby improving system efficiency.

### Embodiment 2

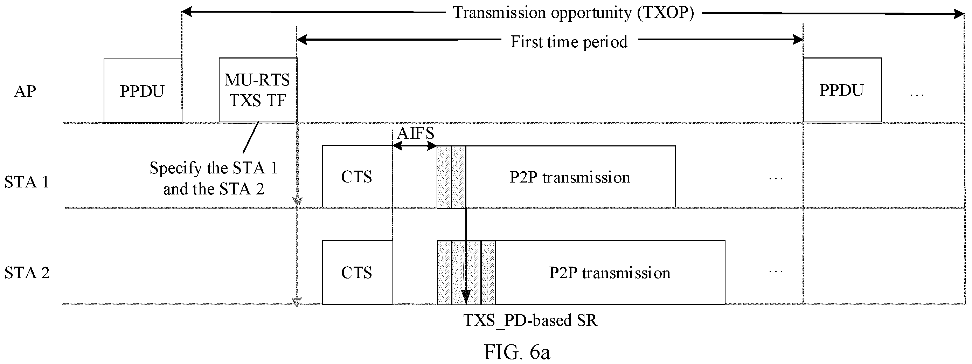

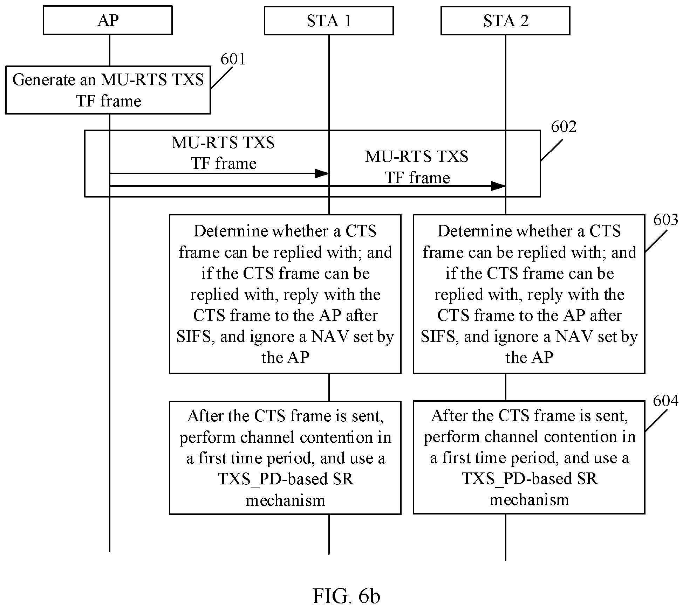

FIG. 6a is a diagram of a scenario of a channel contention-based communication method according to an embodiment of this application. FIG. 6b is a schematic flowchart of a channel contention-based communication method corresponding to FIG. 6a according to an embodiment of this application. As shown in FIG. 6b, the method includes the following steps.

601: An AP serving as a TXOP holder generates an MU-RTS TXS TF frame.

602: The AP sends the MU-RTS TXS TF frame. Correspondingly, a STA 1 receives the MU-RTS TXS TF frame, and a STA 2 receives the MU-RTS TXS TF frame.

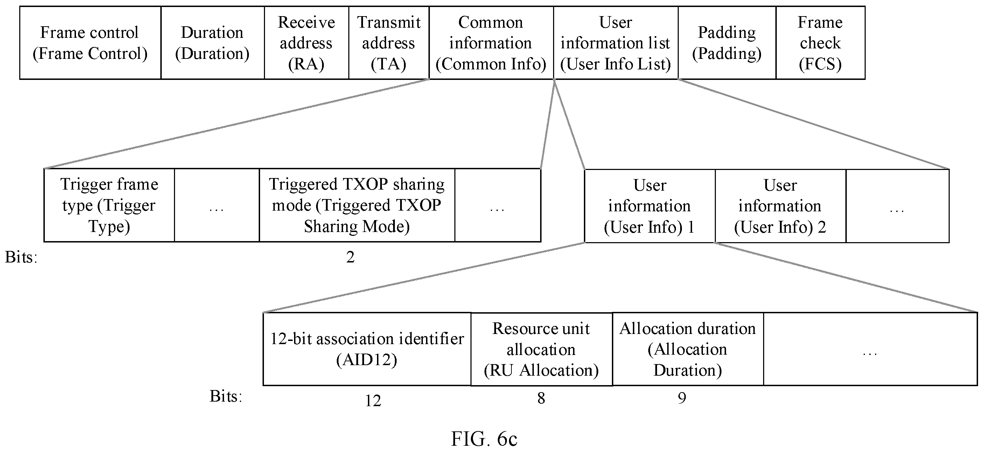

FIG. 6c is a diagram of a structure of an MU-RTS TXS TF frame according to an embodiment of this application. For specific descriptions of the MU-RTS TXS TF frame shown in FIG. 6c, refer to FIG. 4 and FIG. 5c. Details are not described herein again. Different from FIG. 5c, the frame shown in FIG. 6c does not include a primary/secondary indication field. It may be understood that, in the MU-RTS TXS TF frame in this embodiment of this application, one user information field corresponds to the STA 1, and the other user information field corresponds to the STA2. The MU-RTS TXS TF frame may include two user information fields, or may include three or more user information fields. Examples are not listed one by one in this embodiment of this application. It may be understood that, for a STA that receives the MU-RTS TXS TF frame, if a user information field in the MU-RTS TXS TF frame indicates the STA, the STA may perform step 603 and step 604.

Both the STA 1 and the STA 2 shown in FIG. 6a and FIG. 6b may be understood as STAs specified by the AP by using the user information fields. However, the AP does not specify a primary STA and a secondary STA. This may also be understood as a case in which the AP does not distinguish between a primary STA and a secondary STA. This may also be understood as a case in which a relationship similar to fair contention exists between the STA 1 and the STA 2.

603: Determine whether a CTS frame can be replied with; and if the CTS frame can be replied with, reply with the CTS frame to the AP after SIFS, and ignore a NAV configured by the AP.

For a method for determining whether the CTS frame can be replied with, refer to FIG. 5b. Details are not described herein again.

For a specific manner in which the STA ignores the NAV configured by the AP, refer to the descriptions of the foregoing implementation 1. Details are not described herein again. For example, the NAV configured by the AP is ignored based on a value of a triggered TXOP sharing mode field; or the NAV configured by the AP is ignored based on a quantity of user information fields included in the MU-RTS TXS TF frame.

604: After the CTS frame is sent, perform channel contention in the first time period, and use a TXS_PD-based SR mechanism.

For descriptions of step 604, refer to the descriptions of the implementation 1 in FIG. 3. Details are not described herein again. It may be understood that a gray rectangular box in FIG. 6a represents a slot occupied by backoff. For example, if one rectangular box represents one slot, FIG. 6a may indicate that the STA 1 uses two slots for backoff. After AIFS and two slots after the CTS frame is sent, the STA 1 performs P2P transmission. The STA 2 uses four slots for backoff. After AIFS and four slots after the CTS frame is sent, the STA 2 performs P2P transmission.

It may be understood that FIG. 6a to FIG. 6c show two STAs merely as examples, that is, the STA 1 and the STA 2. In specific implementation, more STAs may be further included. Examples are not listed one by one in this embodiment of this application.

It may be understood that, if the value of the triggered TXOP sharing mode field in the MU-RTS TXS TF frame is 2 (as shown in the first understanding manner in FIG. 3), and there is only one user information field, after sending a CTS, a STAindicated by the user information field only needs to wait for SIFS to perform transmission, and does not need to perform backoff.

In this embodiment of this application, the AP shares the first time period with a plurality of STAs, and the plurality of STAs may all perform P2P transmission. Transmission consistency of the plurality of STAs is effectively maintained. In other words, the plurality of STAs all perform P2P transmission. This ensures fairness of the plurality of STAs. This is easy to implement. In addition, system efficiency can be further improved.

### Embodiment 3

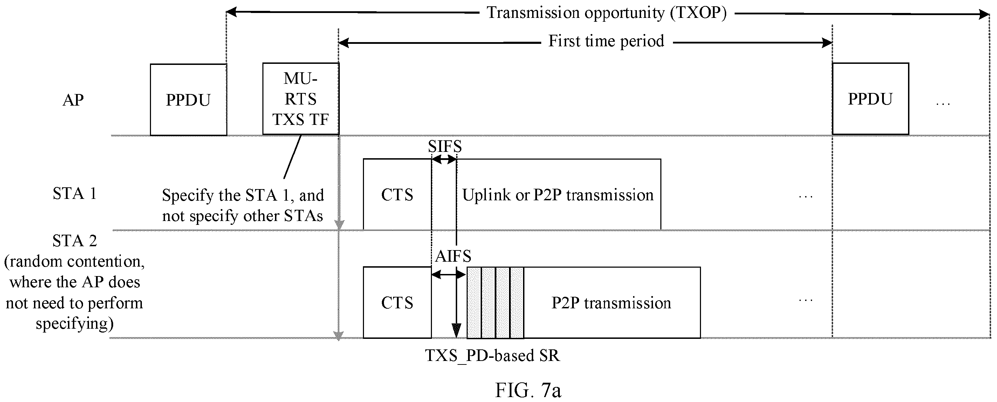

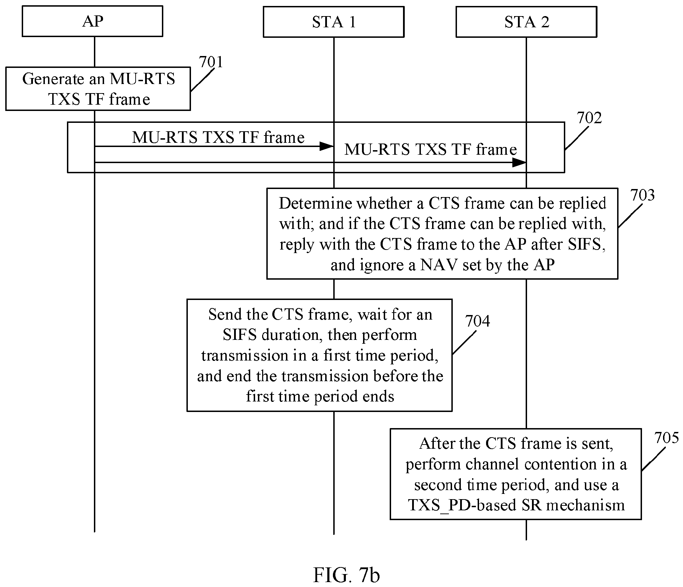

FIG. 7a is a diagram of a scenario of a channel contention-based communication method according to an embodiment of this application. FIG. 7b is a schematic flowchart of a channel contention-based communication method corresponding to FIG. 7a according to an embodiment of this application. As shown in FIG. 7b, the method includes the following steps.

701: An AP serving as a TXOP holder generates an MU-RTS TXS TF frame.

702: The AP sends the MU-RTS TXS TF frame. Correspondingly, a STA 1 receives the MU-RTS TXS TF frame, and a STA 2 receives the MU-RTS TXS TF frame.

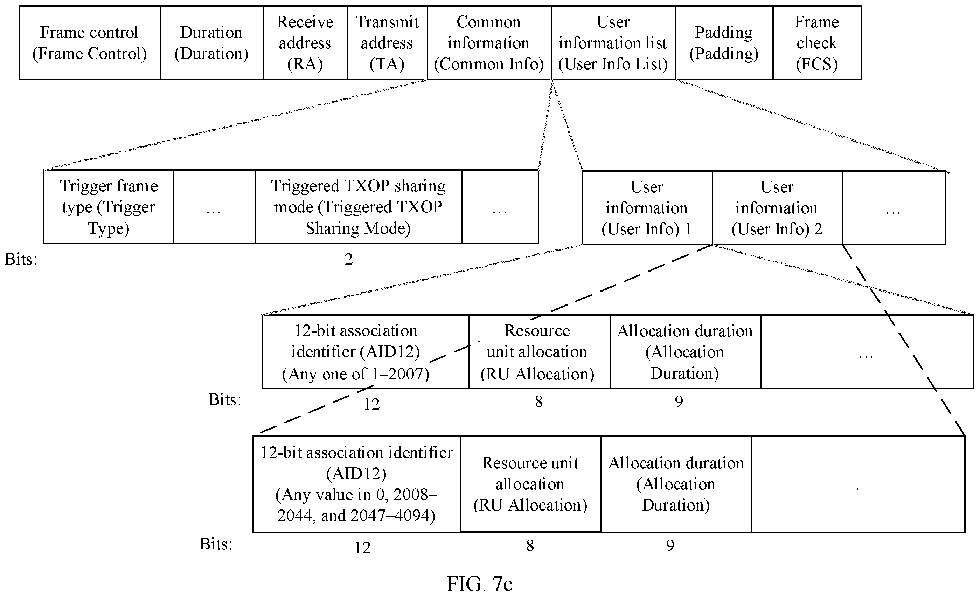

FIG. 7c is a diagram of a structure of an MU-RTS TXS TF frame according to an embodiment of this application. For specific descriptions of the MU-RTS TXS TF frame shown in FIG. 7c, refer to FIG. 4, FIG. 5c, and FIG. 6c. Details are not described herein again. It may be understood that a user information field 1 shown in FIG. 7c may be understood as a first user information field, and a user information field 2 may be understood as a second user information field. For example, the user information field 1 includes a first allocation duration field, and the user information field 2 includes a second allocation duration field. A first time period indicated by the first allocation duration field may be the same as or different from a second time period indicated by the second allocation duration field. This is not limited in this embodiment of this application.

In this embodiment of this application, the MU-RTS TXS TF frame includes two user information fields. For example, the first user information field may correspond to one STA. For descriptions of an association identifier field of the first user information field, refer to FIG. 4. A STA that receives the MU-RTS TXS TF frame may perform UL transmission or P2P transmission (for example, perform step 703 and step 704) based on the first user information field if a user information field included in the frame indicates the STA. An association identifier field of the second user information field may carry any value in 0, 2008-2044, and 2047-4094. The STA that receives the MU-RTS TXS TF frame may learn, based on a value of the association identifier field, that the STA can perform P2P transmission (for example, perform step 703 and step 705), if the frame includes a user information field that does not indicate the STA.

In other words, the STA that receives the MU-RTS TXS TF frame may determine, based on the association identifier field in the user information field, whether the AP specifies the STA. If an identifier carried in the association identifier field is an AID12 of the STA or a P2P identifier associated with the STA, the STA may perform step 703 and step 704. If an identifier carried in the association identifier field is neither an AID12 of the STA nor a P2P identifier associated with the STA, the STA may perform step 703 and step 705.

The STA 1 shown in FIG. 7a and FIG. 7b may be understood as a STA specified by the AP by using the user information field, and the STA 2 may be understood as a STA that is not specified by the AP by using the user information field. FIG. 7a and FIG. 7b show only one STA 2 as an example. There may be more STAs 2. Examples are not listed one by one in this embodiment of this application.

703: Determine whether a CTS frame can be replied with; and if the CTS frame can be replied with, reply with the CTS frame to the AP after SIFS, and ignore a NAV configured by the AP.

For a method for determining whether the CTS frame can be replied with, refer to FIG. 5b. Details are not described herein again.

For a specific manner in which the STA 1 or the STA 2 ignores the NAV configured by the AP, refer to the descriptions of the foregoing implementation 1. Details are not described herein again. For example, the NAV configured by the AP is ignored based on a value of a triggered TXOP sharing mode field; or the NAV configured by the AP is ignored based on a quantity of user information fields included in the MU-RTS TXS TF frame. In addition, the STA 2 may further ignore, based on the association identifier field in the user information field corresponding to the STA 2, the NAV configured by the AP. For example, if a value of the association identifier field is any value in 0, 2008-2044, and 2047-4094, the STA 2 may learn that the NAV configured by the AP needs to be ignored. A value of the association identifier field in the user information field corresponding to the STA 1 may be any one of 1-2007.

704: The STA 1 sends the CTS frame, waits for an SIFS duration, then performs transmission in the first time period, and ends the transmission before the first time period ends.

It may be understood that a primary STA may perform UL transmission or may perform P2P transmission.

705: After sending the CTS frame, the STA 2 performs channel contention in the second time period, and uses a TXS_PD-based SR mechanism.

For descriptions of step 705, refer to the descriptions of the implementation 1 in FIG. 3. Details are not described herein again. For a gray rectangle part in FIG. 7b, refer to FIG. 5a or FIG. 6a. Details are not described herein again.

It may be understood that FIG. 5a to FIG. 5c show two STAs merely as examples, that is, one STA 1 and one STA 2. In specific implementation, more STAs 2 may be further included. For specific implementation of these STAs 2, refer to the STA 2 shown in FIG. 7a and FIG. 7b. Examples are not listed one by one in this embodiment of this application.

In this embodiment of this application, the MU-RTS frame includes two user information fields. One user information field may correspond to one station, and the other user information field may correspond to one or more stations (which may also be understood as that no station is specified), to ensure that a plurality of stations can perform concurrent transmission, thereby improving system efficiency. In addition, two user information fields indicate two or more stations, thereby reducing signaling overheads.

### Embodiment 4

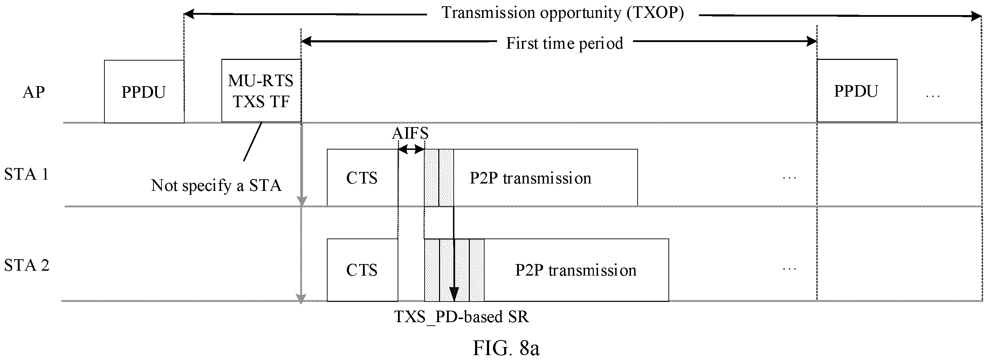

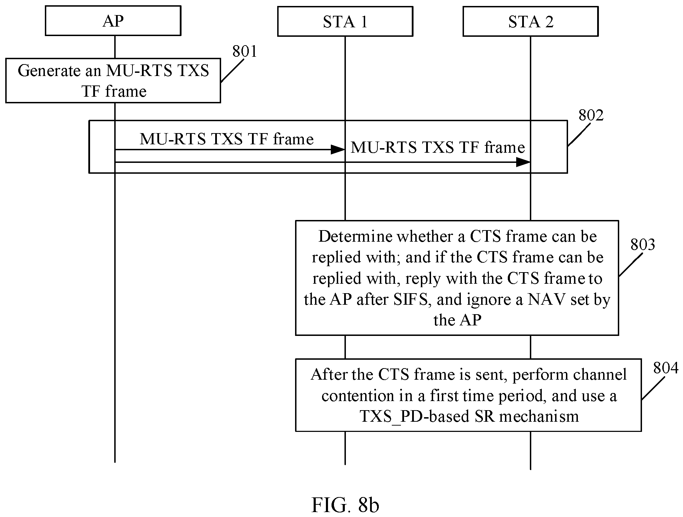

FIG. 8a is a diagram of a scenario of a channel contention-based communication method according to an embodiment of this application. FIG. 8b is a schematic flowchart of a channel contention-based communication method corresponding to FIG. 8a according to an embodiment of this application. As shown in FIG. 8b, the method includes the following steps.

801: An AP serving as a TXOP holder generates an MU-RTS TXS TF frame.

802: The AP sends the MU-RTS TXS TF frame. Correspondingly, a STA 1 receives the MU-RTS TXS TF frame, and a STA 2 receives the MU-RTS TXS TF frame.

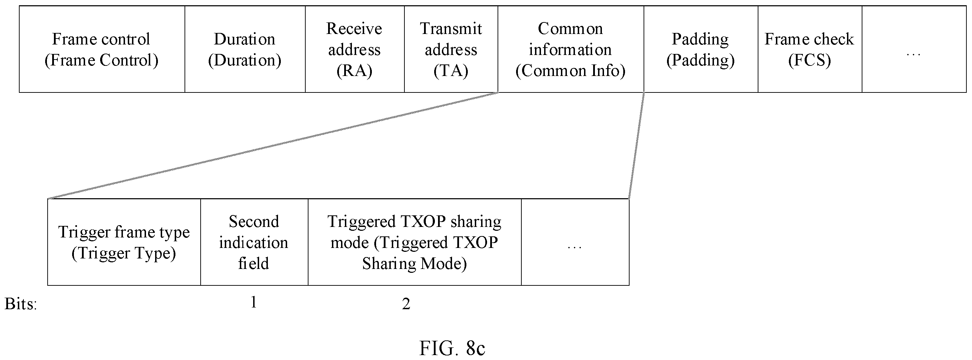

FIG. 8c is a diagram of a structure of an MU-RTS TXS TF frame according to an embodiment of this application. For specific descriptions of the MU-RTS TXS TF frame shown in FIG. 8c, refer to FIG. 4, FIG. 5c, and FIG. 6c. Details are not described herein again.

In this embodiment of this application, the MU-RTS TXS TF frame does not include a user information field. Optionally, a value of a triggered TXOP sharing mode field in the frame shown in FIG. 8c is 3. Therefore, all STAs that receive the MU-RTS TXS TF frame may perform step 803 and step 804 based on the value of the triggered TXOP sharing mode field. Optionally, a common information field shown in FIG. 8c includes a second indication field. For example, a value of the second indication field is 1. A STA that receives the MU-RTS TXS TF frame may learn based on the value of the second indication field that the STA allows a TXS_PD-based SR mechanism in the first time period. For descriptions of the second indication field, refer to the implementation 1 in FIG. 3. Details are not described herein again. When the common information field includes the second indication field, and the value of the second indication field indicates that the TXS_PD-based SR mechanism is allowed, the value of the triggered TXOP sharing mode field may be 2 or 3. This is not limited in this embodiment of this application.

Both the STA 1 and the STA 2 shown in FIG. 8a and FIG. 8b may be understood as STAs that are not specified by the AP by using the user information fields and that receive the MU-RTS TXS TF frame.

803: Determine whether a CTS frame can be replied with; and if the CTS frame can be replied with, reply with the CTS frame to the AP after SIFS, and ignore a NAV configured by the AP.

For a method for determining whether the CTS frame can be replied with, refer to FIG. 5b. Details are not described herein again.

For a specific manner in which the STA 1 or the STA 2 ignores the NAV configured by the AP, refer to the descriptions of the foregoing implementation 1. Details are not described herein again. For example, the STA 1 or the STA 2 may ignore, based on the value of the triggered TXOP sharing mode field, the NAV configured by the AP. In addition, the STA 1 or the STA2 may ignore, based on a case in which the MU-RTS TXS TF frame does not include a user information field, the NAV configured by the AP. For another example, the STA 1 or the STA 2 may further ignore, based on the second indication field included in the common information field, the NAV configured by the AP.

804: After the CTS frame is sent, perform channel contention in the first time period, and use a TXS_PD-based SR mechanism.

For descriptions of step 804, refer to the descriptions of the implementation 1 in FIG. 3. Details are not described herein again. For a gray rectangle part in FIG. 8b, refer to FIG. 5a or FIG. 6a. Details are not described herein again.

It may be understood that FIG. 5a to FIG. 5c show two STAs merely as examples, that is, one STA 1 and one STA 2. In specific implementation, more STAs may be further included. Examples are not listed one by one in this embodiment of this application.

In this embodiment of this application, the common information field in the MU-RTS frame may include the second indication field. Therefore, a STA that receives the MU-RTS frame may determine, based on the second indication information, that the STA is allowed to perform the TXS_PD-based SR mechanism, to ensure that a plurality of stations can perform concurrent transmission, thereby improving system efficiency and reducing signaling overheads.

It should be noted that, in this embodiment of this application, the MU-RTS TXS TF frame may include one user information field, and the user information field may correspond to one STA. In other words, the AP allocates the first time period to the indicated STA. Optionally, the MU-RTS TXS TF frame may further include the triggered TXOP sharing mode field, and the value of the triggered TXOP sharing mode field may be a value other than 0, 1, and 2. Based on the value of the TXOP sharing mode field, the station that receives the MU-RTS TXS TF frame may learn that the station can perform the TXS_PD-based SR mechanism, or may learn that the station can share the first time period allocated by the AP. Optionally, the user information field may include a field that indicates whether the TXS_PD-based SR mechanism is allowed. The STA may learn based on the field that the STA can perform the TXS_PD-based SR mechanism. In this case, the value of the triggered TXOP sharing mode field may be 2, or may be a value other than 0, 1, and 2. Optionally, the common information field in the MU-RTS TXS TF frame may include the second indication field. For descriptions of the second indication field, refer to Embodiment 4. Details are not described herein again.

When the MU-RTS TXS TF frame includes one user information field, a STA indicated by the user information field may wait for SIFS after sending a CTS, may perform transmission, and does not perform backoff. For a specific implementation of the STA, refer to the descriptions of the primary station in Embodiment 1, or refer to the descriptions of the STA 1 in Embodiment 3. Details are not described herein again.

### Embodiment 5

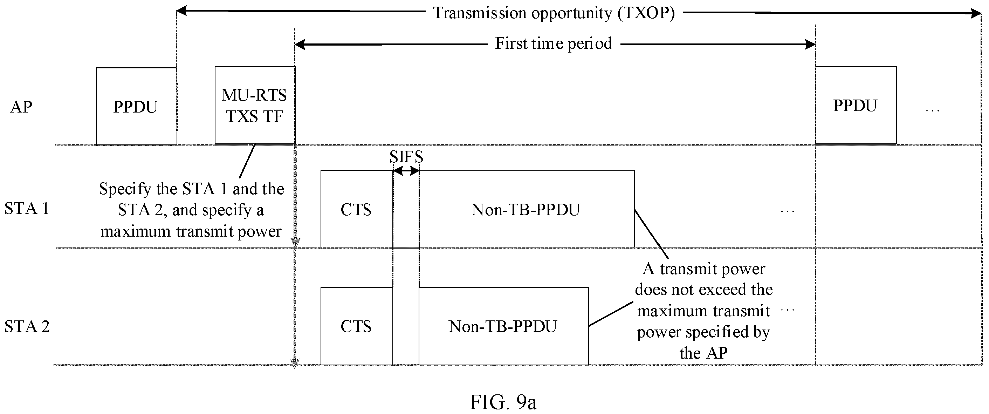

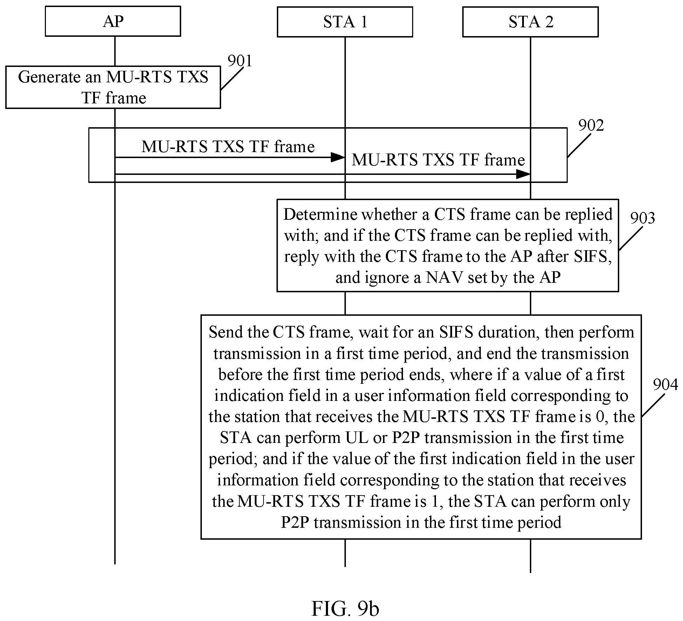

FIG. 9a is a diagram of a scenario of a channel contention-based communication method according to an embodiment of this application. FIG. 9b is a schematic flowchart of a channel contention-based communication method corresponding to FIG. 9a according to an embodiment of this application. As shown in FIG. 9b, the method includes the following steps.

901: An AP serving as a TXOP holder generates an MU-RTS TXS TF frame.

902: The AP sends the MU-RTS TXS TF frame. Correspondingly, a primary STA receives the MU-RTS TXS TF frame, and a secondary STA receives the MU-RTS TXS TF frame.

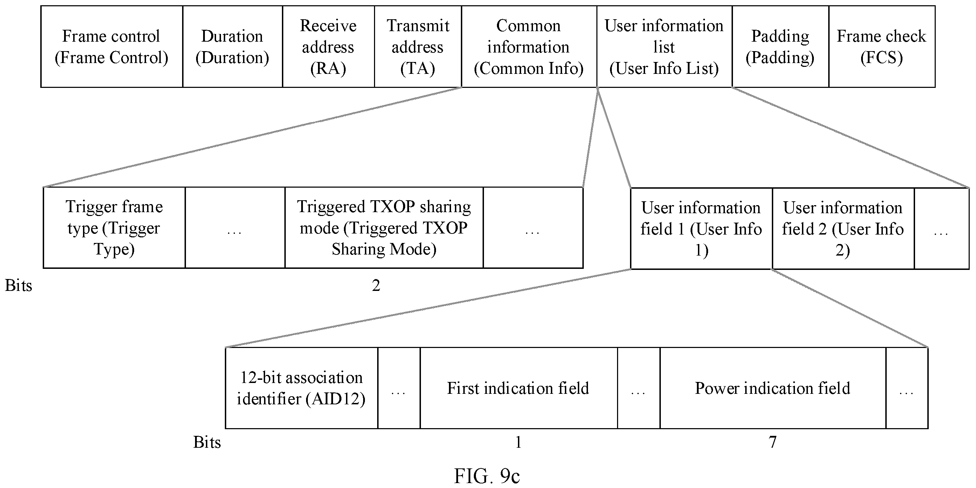

FIG. 9c is a diagram of a structure of an MU-RTS TXS TF frame according to an embodiment of this application. For specific descriptions of the MU-RTS TXS TF frame shown in FIG. 9c, refer to FIG. 4, FIG. 5c, and FIG. 6c. Details are not described herein again.

In this embodiment of this application, the MU-RTS TXS TF frame includes a plurality of user information fields, and one user information field may correspond to one STA.

Optionally, a common information field in the MU-RTS TXS TF frame may include a second indication field, and a STA that receives the MU-RTS TXS TF frame may learn based on the second indication field that the STA supports a TXS_PD-based SR mechanism. Certainly, the common information field may not include the second indication field, and the STA may learn, from a user information field corresponding to the STA, that the STA supports the TXS_PD-based SR mechanism.

In an example, each of the plurality of user information fields includes a first indication field, and the first indication field may indicate that a corresponding station is allowed to perform P2P transmission in a first time period. Alternatively, the first indication field may indicate that a corresponding station is allowed to perform UL transmission or P2P transmission in a first time period. The first indication field may also be referred to as a "TXS uplink or P2P" field or a "TXS UL/P2P field". For example, the first indication field may occupy 1 bit. A value 0 of the first indication field may indicate that the STA indicated by the user information field can perform UL or P2P transmission in the first time period. A value 1 of the first indication field indicates that the STA indicated by the user information field can perform only P2P transmission and cannot perform UL transmission in the first time period. It may be understood that the value of the first indication field and a meaning corresponding to each value shown herein are merely examples. For example, a value 1 of the first indication field may indicate that the STA indicated by the user information field can perform UL or P2P transmission in the first time period. A value 0 of the first indication field indicates that the STA indicated by the user information field can perform only P2P transmission and cannot perform UL transmission in the first time period.

In another example, in the plurality of user information fields, a user information field that corresponds to the STA that is specified by the AP and that needs to perform UL transmission or P2P transmission may include a first indication field. For example, a value of the first indication field is 0. Another user information field in the MU-RTS TXS TF frame may not include the first indication field. A station that receives the frame may learn, based on a case in which the user information field corresponding to the station does not include the first indication field, that the station can perform P2P transmission in the first time period.

For example, the first indication field may use an original reserved bit in the MU-RTS TXS TF frame. For example, an uplink dual carrier modulation (dual carrier modulation, DCM) (UL DCM) field is reserved for the MU-RTS TXS TF frame. Therefore, the UL DCM field may be reused as the first indication field. It should be noted that a reserved bit or a reserved bit of the original MU-RTS TXS TF frame may be reused as the first indication field. Usually, the AP may fill at most a first indication field in one user information field with 0 (indicating that the STA indicated by the user information field can perform UL or P2P transmission in the first time period), and fill all first indication fields in other remaining user information fields with 1. It should be noted that, if the value of the triggered TXOP sharing mode field is a value other than 0, 1, and 2, the user information field may not include the first indication field.

In an example, each of the plurality of user information fields may include a power indication field, and the power indication field may indicate a maximum transmit power of the station corresponding to the user information field in the first time period. The power indication field may also be referred to as a TXS maximum transmit power (TXS Maximum TX Power) field or the like. A name of the power indication field is not limited in this embodiment of this application. For example, the power indication field may occupy N bits, and a value of N depends on a quantity of possible values of the maximum transmit power. For example, if a value of the power indication field is x, the maximum transmit power that can be used when the corresponding STA is allowed to perform transmission in the first time period is P₀+kx, where P₀ is a reference power (for example, a value is -20 dBm), and k is a proportional coefficient (for example, a value is 1). Herein, a relationship between the value of the power indication field and the indicated maximum transmit power is merely an example. This is not limited in this embodiment of this application. Optionally, that values of all bits in the power indication field are 1 may indicate that the AP does not limit a transmit power of the corresponding STA. For example, an uplink target receive power (UL target receive power) is reserved for the MU-RTS TXS TF frame, and therefore may be reused as a power indication field. It should be noted that a reserved bit or a reserved bit of the original MU-RTS TXS TF frame may be reused as the power indication field.

In another example, at least one of the plurality of user information fields may include the power indication field. In this case, a maximum transmit power of a STA for which a power indication field is not included may be the same as a maximum transmit power that is located before a user information field corresponding to the STA and that is of a STA for which a power indication field is included.

903: Determine whether a CTS frame can be replied with; and if the CTS frame can be replied with, reply with the CTS frame to the AP after SIFS, and ignore a NAV configured by the AP.

904: Send the CTS, wait for an SIFS duration, then perform transmission in the first time period, and end the transmission before the first time period ends. If the value of the first indication field in the user information field corresponding to the station that receives the MU-RTS TXS TF frame is 0, the STA can perform UL or P2P transmission in the first time period. If the value of the first indication field in the user information field corresponding to the station that receives the MU-RTS TXS TF frame is 1, the STA can perform only P2P transmission in the first time period. A maximum transmit power value that can be used by the STA is a power value indicated by the power indication field.

In this embodiment of this application, the user information field includes the power indication field, so that the corresponding station can perform P2P transmission based on the maximum transmit power indicated by the AP. Through appropriately allocating the maximum transmit power, interference between different stations can be effectively reduced, to ensure that a plurality of stations can perform P2P transmission in the first time period.

In the foregoing embodiments, for a part that is not described in detail in one embodiment, refer to other embodiments.

A communication apparatus provided in embodiments of this application is described below.

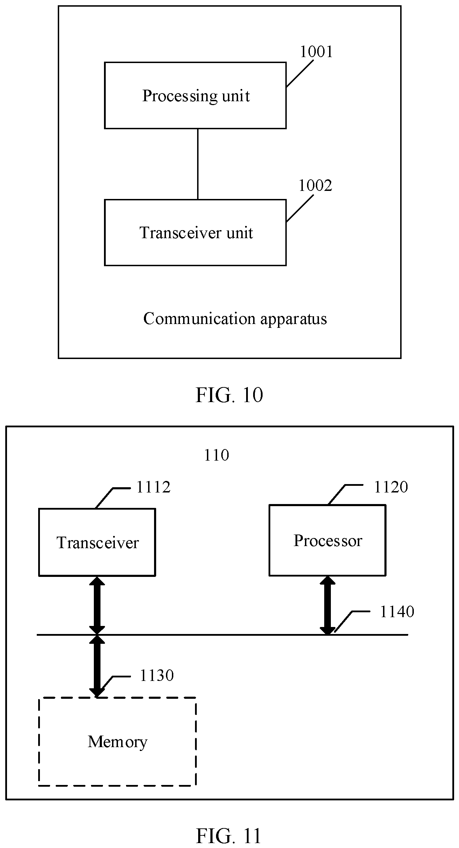

In this application, the communication apparatus is divided into functional modules based on the foregoing method embodiments. For example, functional modules corresponding to functions may be obtained through division, or two or more functions may be integrated into one processing module. The integrated module may be implemented in a form of hardware, or may be implemented in a form of software functional module. It should be noted that division into modules in this application is an example and is merely logical function division. In actual implementation, there may be another division manner. The following describes in detail the communication apparatus in embodiments of this application in detail with reference to FIG. 10 to FIG. 12.

FIG. 10 is a diagram of a structure of a communication apparatus according to an embodiment of this application. As shown in FIG. 10, the communication apparatus includes a processing unit 1001 and a transceiver unit 1002.

In some embodiments of this application, the communication apparatus may be the STA or the chip shown above, and the chip may be disposed in the STA. In other words, the communication apparatus may be configured to perform the steps, the functions, or the like performed by the STA in the foregoing method embodiments (including FIG. 3). For example, the communication apparatus is a secondary station when primary and secondary stations are distinguished by using an MU-RTS frame (for example, Embodiment 1), or is a station specified by using a user information field (for example, Embodiment 2 or Embodiment 5).

The transceiver unit 1002 is configured to receive an MU-RTS frame. The MU-RTS frame includes a plurality of user information fields. The user information field includes an allocation duration field. The user information field corresponds to one station. The allocation duration field indicates a first time period corresponding to the station corresponding to the user information field.

The processing unit 1001 is configured to perform P2P transmission in the first time period based on the MU-RTS frame.

In a possible implementation, the processing unit 1001 is specifically configured to: ignore, based on the MU-RTS frame, a NAV configured by an access point, perform channel contention in the first time period, and perform P2P transmission in the first time period when channel contention succeeds.

In a possible implementation, the processing unit 1001 is specifically configured to perform at least one of the following: ignore, based on a value of a triggered TXOP sharing mode field in the MU-RTS frame, the NAV configured by the AP; ignore, based on a quantity of user information fields in the MU-RTS frame, the NAV configured by the AP; and ignore, based on a primary/secondary indication field in the user information field in the MU-RTS frame, the NAV configured by the AP.

In a possible implementation, the processing unit 1001 is specifically configured to: when a PPDU is received, perform backoff based on a received power of the PPDU and a first CCA threshold. The PPDU includes an intra-BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the processing unit 1001 is specifically configured to: further perform backoff if the received power of the PPDU is less than or equal to the first CCA threshold; or stop backoff if the received power of the PPDU is greater than the first CCA threshold.

In a possible implementation, the processing unit 1001 is specifically configured to perform P2P transmission in the first time period based on at least one of the following: an order of a corresponding user information field, a primary/secondary indication field in the corresponding user information field, and the value of the triggered TXOP sharing mode field in the MU-RTS frame.

In a possible implementation, the processing unit 1001 is specifically configured to perform P2P transmission in the first time period based on the maximum transmit power.

In a possible implementation, the processing unit 1001 is specifically configured to: when the user information field includes a first indication field, and the first indication field indicates that the station corresponding to the user information field is allowed to perform P2P transmission in the first time period, perform P2P transmission in the first time period based on the maximum transmit power; or when the MU-RTS frame includes a triggered TXOP sharing mode field, and a value of the TXOP sharing mode field is 2 or a value other than 0, 1, and 2, perform P2P transmission in the first time period based on the maximum transmit power.

In some other embodiments of this application, the communication apparatus may be the STA or the chip shown above, and the chip may be disposed in the STA. In other words, the communication apparatus may be configured to perform the steps, the functions, or the like performed by the STA in the foregoing method embodiments (including FIG. 3). For example, the communication apparatus is a primary station when primary and secondary stations are distinguished by using an MU-RTS frame (for example, Embodiment 1), or is a station that is indicated by using the first indication field to perform UL transmission or P2P transmission (for example, Embodiment 5).

The transceiver unit 1002 is configured to receive a multi-user request to send MU-RTS frame. The MU-RTS frame includes a plurality of user information fields. The user information field includes an allocation duration field. The user information field corresponds to one station. The allocation duration field indicates a first time period corresponding to the station corresponding to the user information field.

The processing unit 1001 is configured to perform UL transmission or P2P transmission in the first time period based on the MU-RTS frame.

In a possible implementation, the processing unit 1001 is specifically configured to perform UL transmission or P2P transmission in the first time period based on at least one of the following: an order of a corresponding user information field, a primary/secondary indication field in the corresponding user information field, and the value of the triggered TXOP sharing mode field in the MU-RTS frame.

In a possible implementation, the processing unit 1001 is specifically configured to perform UL transmission or P2P transmission in the first time period based on a maximum transmit power.

In a possible implementation, the processing unit 1001 is specifically configured to: when the user information field includes a first indication field, and the first indication field indicates that the station corresponding to the user information field is allowed to perform UL transmission or P2P transmission in the first time period, perform UL transmission or P2P transmission in the first time period based on the maximum transmit power; or when the MU-RTS frame includes a triggered TXOP sharing mode field, and a value of the TXOP sharing mode field is 2 or a value other than 0, 1, and 2, perform UL transmission or P2P transmission in the first time period based on the maximum transmit power.

In some other embodiments of this application, the communication apparatus may be the AP or the chip shown above, and the chip may be disposed in the AP. In other words, the communication apparatus may be configured to perform steps, functions, or the like performed by the AP in the foregoing method embodiments (including FIG. 3, Embodiment 1, Embodiment 2, and Embodiment 5).

The processing unit 1001 is configured to generate a multi-user request to send MU-RTS frame. The MU-RTS frame includes a plurality of user information fields. The user information field includes an allocation duration field. The user information field corresponds to one station. The allocation duration field indicates a first time period corresponding to the station corresponding to the user information field.

The transceiver unit 1002 is configured to send the MU-RTS frame.

In some other embodiments of this application, the communication apparatus may be the STA or the chip shown above, and the chip may be disposed in the STA. In other words, the communication apparatus may be configured to perform the steps, the functions, or the like performed by the STA in the foregoing method embodiments (including FIG. 3). For example, the communication apparatus is an unspecified station in a scenario in which one station is indicated by using one user information field in an MU-RTS frame and one or more stations indicated by using another user information field in the frame (that is, no station is specified) (for example, Embodiment 3).

The transceiver unit 1002 is configured to receive a multi-user request to send MU-RTS frame. The MU-RTS frame includes a first user information field and a second user information field. The first user information field corresponds to one station. The second user information field corresponds to one or more stations. The first user information field includes a first allocation duration field. The first allocation duration field indicates a first time period corresponding to a station corresponding to the first user information field. The second user information field includes a second allocation duration field. The second allocation duration field indicates a second time period corresponding to a station corresponding to the second user information field.

The processing unit 1001 is configured to perform P2P transmission in the second time period based on the MU-RTS frame.

In a possible implementation, the processing unit 1001 is specifically configured to: ignore, based on the MU-RTS frame, a network allocation vector NAV configured by an access point, perform channel contention in the second time period, and perform P2P transmission in the second time period when channel contention succeeds.

In a possible implementation, the processing unit 1001 is specifically configured to: when a physical layer protocol data unit PPDU is received, perform backoff based on a received power of the PPDU and a first CCA threshold. The PPDU includes an intra-basic service set BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the processing unit 1001 is specifically configured to: further perform backoff if the received power of the PPDU is less than or equal to the first CCA threshold; or stop backoff if the received power of the PPDU is greater than the first CCA threshold.

In some other embodiments of this application, the communication apparatus may be the AP or the chip shown above, and the chip may be disposed in the AP. In other words, the communication apparatus may be configured to perform the steps, the functions, or the like performed by the AP in the foregoing method embodiments (including FIG. 3 and Embodiment 3).

The processing unit 1001 is configured to generate a multi-user request to send MU-RTS frame. The MU-RTS frame includes a first user information field and a second user information field. The first user information field corresponds to one station. The second user information field corresponds to one or more stations. The first user information field includes a first allocation duration field. The first allocation duration field indicates a first time period corresponding to a station corresponding to the first user information field. The second user information field includes a second allocation duration field. The second allocation duration field indicates a second time period corresponding to a station corresponding to the second user information field.

The transceiver unit 1002 is configured to send the MU-RTS frame.

In some other embodiments of this application, the communication apparatus may be the STA or the chip shown above, and the chip may be disposed in the STA. In other words, the communication apparatus may be configured to perform the steps, the functions, or the like performed by the STA in the foregoing method embodiments (including FIG. 3 and Embodiment 4).

The transceiver unit 1002 is configured to receive a multi-user request to send MU-RTS frame. The MU-RTS frame includes a common information field. The common information field includes a second indication field. The second indication field indicates whether a plurality of stations are allowed to share a first time period. The first time period is a period of time in a transmission opportunity TXOP.

The processing unit 1001 is configured to: when the second indication field indicates that the plurality of stations are allowed to share the first time period, perform point-to-point P2P transmission in the first time period based on the MU-RTS frame.

In a possible implementation, the processing unit 1001 is specifically configured to: ignore, based on the MU-RTS frame, a network allocation vector NAV configured by an access point, perform channel contention in the first time period, and perform P2P transmission in the first time period when channel contention succeeds.

In a possible implementation, the processing unit 1001 is specifically configured to: when a PPDU is received, perform backoff based on a received power of the PPDU and a first clear channel assessment CCA threshold. The PPDU includes an intra-basic service set BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the processing unit 1001 is specifically configured to: further perform backoff if the received power of the PPDU is less than or equal to the first CCA threshold; or stop backoff if the received power of the PPDU is greater than the first CCA threshold.

In some other embodiments of this application, the communication apparatus may be the AP or the chip shown above, and the chip may be disposed in the AP. In other words, the communication apparatus may be configured to perform the steps, the functions, or the like performed by the AP in the foregoing method embodiments (including FIG. 3 and Embodiment 4).

The processing unit 1001 is configured to generate a multi-user request to send MU-RTS frame. The MU-RTS frame includes a common information field. The common information field includes a second indication field. The second indication field indicates whether a plurality of stations are allowed to share a first time period. The first time period is a period of time in a transmission opportunity TXOP.

The transceiver unit 1002 is configured to send the MU-RTS frame.

It may be understood that specific descriptions of the transceiver unit and the processing unit described in this embodiment of this application are merely examples. For specific functions, performed steps, or the like of the transceiver unit and the processing unit, refer to the foregoing method embodiments. Details are not described herein again.

In the foregoing embodiments, for descriptions of the MU-RTS frame, the user information field, the common information field, the triggered TXOP sharing mode field, and the like, refer to the descriptions in the foregoing method embodiments. Details are not described herein again.

The foregoing describes the communication apparatus in this embodiment of this application. The following describes a possible product form of the communication apparatus. It should be understood that any form of product that has a function of the communication apparatus in FIG. 10 falls within the protection scope of embodiments of this application. It should be further understood that the following description is merely an example, and a product form of the communication apparatus in embodiments of this application is not limited thereto.

In a possible implementation, in the communication apparatus shown in FIG. 10, the processing unit 1001 may be one or more processors, and the transceiver unit 1002 may be a transceiver or the transceiver unit 1002 may include a sending unit and a receiving unit. The sending unit may be a transmitter, and the receiving unit may be a receiver. The sending unit and the receiving unit are integrated into one device, for example, a transceiver. In this embodiment of this application, the processor and the transceiver may be coupled, or the like. A manner of connecting the processor and the transceiver is not limited in this embodiment of this application. In a process of performing the foregoing method, a process of sending information in the foregoing method may be understood as a process in which the processor outputs the foregoing information. When outputting the information, the processor outputs the information to the transceiver, so that the transceiver transmits the information. After the information is output by the processor, other processing may further need to be performed on the information before the information arrives at the transceiver. Similarly, a process of receiving information in the foregoing method may be understood as a process of receiving the input information by the processor. When the processor receives the input information, the transceiver receives the information, and inputs the information to the processor. Further, after the transceiver receives the information, other processing may need to be performed on the information before the information is input to the processor.

As shown in FIG. 11, the communication apparatus 110 includes one or more processors 1120 and a transceiver 1112.

In some embodiments of this application, the communication apparatus may be configured to perform the steps, the functions, or the like performed by the STA in the foregoing method embodiments (including FIG. 3). For example, the communication apparatus is a secondary station when primary and secondary stations are distinguished by using an MU-RTS frame (for example, Embodiment 1), or is a station specified by using a user information field (for example, Embodiment 2 or Embodiment 5).

The transceiver 1112 is configured to receive an MU-RTS frame. The MU-RTS frame includes a plurality of user information fields. The user information field includes an allocation duration field. The user information field corresponds to one station. The allocation duration field indicates a first time period corresponding to the station corresponding to the user information field.

The processor 1120 is configured to perform P2P transmission in the first time period based on the MU-RTS frame.

In a possible implementation, the processor 1120 is specifically configured to: ignore, based on the MU-RTS frame, a NAV configured by an access point, perform channel contention in the first time period, and perform P2P transmission in the first time period when channel contention succeeds.

In a possible implementation, the processor 1120 is specifically configured to perform at least one of the following: ignore, based on a value of a triggered TXOP sharing mode field in the MU-RTS frame, the NAV configured by the AP; ignore, based on a quantity of user information fields in the MU-RTS frame, the NAV configured by the AP; and ignore, based on a primary/secondary indication field in the user information field in the MU-RTS frame, the NAV configured by the AP.

In a possible implementation, the processor 1120 is specifically configured to: when a PPDU is received, perform backoff based on a received power of the PPDU and a first CCA threshold. The PPDU includes an intra-BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the processor 1120 is specifically configured to: further perform backoff if the received power of the PPDU is less than or equal to the first CCA threshold; or stop backoff if the received power of the PPDU is greater than the first CCA threshold.

In a possible implementation, the processor 1120 is specifically configured to perform P2P transmission in the first time period based on at least one of the following: an order of a corresponding user information field, a primary/secondary indication field in the corresponding user information field, and the value of the triggered TXOP sharing mode field in the MU-RTS frame.

In a possible implementation, the processor 1120 is specifically configured to perform P2P transmission in the first time period based on the maximum transmit power.

In a possible implementation, the processor 1120 is specifically configured to: when the user information field includes a first indication field, and the first indication field indicates that the station corresponding to the user information field is allowed to perform P2P transmission in the first time period, perform P2P transmission in the first time period based on the maximum transmit power; or when the MU-RTS frame includes a triggered TXOP sharing mode field, and a value of the TXOP sharing mode field is 2 or a value other than 0, 1, and 2, perform P2P transmission in the first time period based on the maximum transmit power.

In some other embodiments of this application, the communication apparatus may be configured to perform the steps, the functions, or the like performed by the STA in the foregoing method embodiments (including FIG. 3). For example, the communication apparatus is a primary station when primary and secondary stations are distinguished by using an MU-RTS frame (for example, Embodiment 1), or is a station that is indicated by using the first indication field to perform UL transmission or P2P transmission (for example, Embodiment 5).

The transceiver 1112 is configured to receive a multi-user request to send MU-RTS frame. The MU-RTS frame includes a plurality of user information fields. The user information field includes an allocation duration field. The user information field corresponds to one station. The allocation duration field indicates a first time period corresponding to the station corresponding to the user information field.

The processor 1120 is configured to perform UL transmission or P2P transmission in the first time period based on the MU-RTS frame.

In a possible implementation, the processor 1120 is specifically configured to perform UL transmission or P2P transmission in the first time period based on at least one of the following: an order of a corresponding user information field, a primary/secondary indication field in the corresponding user information field, and the value of the triggered TXOP sharing mode field in the MU-RTS frame.

In a possible implementation, the processor 1120 is specifically configured to perform UL transmission or P2P transmission in the first time period based on a maximum transmit power.

In a possible implementation, the processor 1120 is specifically configured to: when the user information field includes a first indication field, and the first indication field indicates that the station corresponding to the user information field is allowed to perform UL transmission or P2P transmission in the first time period, perform UL transmission or P2P transmission in the first time period based on the maximum transmit power; or when the MU-RTS frame includes a triggered TXOP sharing mode field, and a value of the TXOP sharing mode field is 2 or a value other than 0, 1, and 2, perform UL transmission or P2P transmission in the first time period based on the maximum transmit power.

In some other embodiments of this application, the communication apparatus may be configured to perform steps, functions, or the like performed by the AP in the foregoing method embodiments (including FIG. 3, Embodiment 1, Embodiment 2, and Embodiment 5).

The processor 1120 is configured to generate a multi-user request to send MU-RTS frame. The MU-RTS frame includes a plurality of user information fields. The user information field includes an allocation duration field. The user information field corresponds to one station. The allocation duration field indicates a first time period corresponding to the station corresponding to the user information field.

The transceiver 1112 is configured to send the MU-RTS frame.

In some other embodiments of this application, the communication apparatus may be the STA or the chip shown above, and the chip may be disposed in the STA. In other words, the communication apparatus may be configured to perform the steps, the functions, or the like performed by the STA in the foregoing method embodiments (including FIG. 3). For example, the communication apparatus is an unspecified station in a scenario in which one station is indicated by using one user information field in an MU-RTS frame and one or more stations indicated by using another user information field in the frame (that is, no station is specified) (for example, Embodiment 3).

The transceiver 1112 is configured to receive a multi-user request to send MU-RTS frame. The MU-RTS frame includes a first user information field and a second user information field. The first user information field corresponds to one station. The second user information field corresponds to one or more stations. The first user information field includes a first allocation duration field. The first allocation duration field indicates a first time period corresponding to a station corresponding to the first user information field. The second user information field includes a second allocation duration field. The second allocation duration field indicates a second time period corresponding to a station corresponding to the second user information field.

The processor 1120 is configured to perform P2P transmission in the second time period based on the MU-RTS frame.

In a possible implementation, the processor 1120 is specifically configured to: ignore, based on the MU-RTS frame, a network allocation vector NAV configured by an access point, perform channel contention in the second time period, and perform P2P transmission in the second time period when channel contention succeeds.

In a possible implementation, the processor 1120 is specifically configured to: when a physical layer protocol data unit PPDU is received, perform backoff based on a received power of the PPDU and a first CCA threshold. The PPDU includes an intra-basic service set BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the processor 1120 is specifically configured to: further perform backoff if the received power of the PPDU is less than or equal to the first CCA threshold; or stop backoff if the received power of the PPDU is greater than the first CCA threshold.

In some other embodiments of this application, the communication apparatus may be configured to perform the steps, the functions, or the like performed by the AP in the foregoing method embodiments (including FIG. 3 and Embodiment 3).

The processor 1120 is configured to generate a multi-user request to send MU-RTS frame. The MU-RTS frame includes a first user information field and a second user information field. The first user information field corresponds to one station. The second user information field corresponds to one or more stations. The first user information field includes a first allocation duration field. The first allocation duration field indicates a first time period corresponding to a station corresponding to the first user information field. The second user information field includes a second allocation duration field. The second allocation duration field indicates a second time period corresponding to a station corresponding to the second user information field.

The transceiver 1112 is configured to send the MU-RTS frame.

In some other embodiments of this application, the communication apparatus may be the STA or the chip shown above, and the chip may be disposed in the STA. In other words, the communication apparatus may be configured to perform the steps, the functions, or the like performed by the STA in the foregoing method embodiments (including FIG. 3 and Embodiment 4).

The transceiver 1112 is configured to receive a multi-user request to send MU-RTS frame. The MU-RTS frame includes a common information field. The common information field includes a second indication field. The second indication field indicates whether a plurality of stations are allowed to share a first time period. The first time period is a period of time in a transmission opportunity TXOP.

The processor 1120 is configured to: when the second indication field indicates that the plurality of stations are allowed to share the first time period, perform point-to-point P2P transmission in the first time period based on the MU-RTS frame.

In a possible implementation, the processor 1120 is specifically configured to: ignore, based on the MU-RTS frame, a network allocation vector NAV configured by an access point, perform channel contention in the first time period, and perform P2P transmission in the first time period when channel contention succeeds.

In a possible implementation, the processor 1120 is specifically configured to: when a PPDU is received, perform backoff based on a received power of the PPDU and a first clear channel assessment CCA threshold. The PPDU includes an intra-basic service set BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the processor 1120 is specifically configured to: further perform backoff if the received power of the PPDU is less than or equal to the first CCA threshold; or stop backoff if the received power of the PPDU is greater than the first CCA threshold.

In some other embodiments of this application, the communication apparatus may be configured to perform the steps, the functions, or the like performed by the AP in the foregoing method embodiments (including FIG. 3 and Embodiment 4).

The processor 1120 is configured to generate a multi-user request to send MU-RTS frame. The MU-RTS frame includes a common information field. The common information field includes a second indication field. The second indication field indicates whether a plurality of stations are allowed to share a first time period. The first time period is a period of time in a transmission opportunity TXOP.

The transceiver 1112 is configured to send the MU-RTS frame.

It may be understood that specific descriptions of the transceiver and the processor described in this embodiment of this application are merely examples. For specific functions, performed steps, or the like of the transceiver and the processor, refer to the foregoing method embodiments. Details are not described herein again.

In the foregoing embodiments, for descriptions of the MU-RTS frame, the user information field, the common information field, the triggered TXOP sharing mode field, and the like, refer to the descriptions in the foregoing method embodiments. Details are not described herein again.

In each implementation of the communication apparatus shown in FIG. 11, the transceiver may include a receiver and a transmitter. The receiver is configured to perform a receiving function (or operation). The transmitter is configured to perform a transmitting function (or operation). The transceiver is configured to communicate with another device/apparatus through a transmission medium.

Optionally, the communication apparatus 110 may further include one or more memories 1130, configured to store program instructions, data, and/or the like. The memory 1130 is coupled to the processor 1120. Coupling in this embodiment of this application may be indirect coupling or a communication connection between apparatuses, units, or modules in an electrical form, a mechanical form, or another form, and is used for information exchange between the apparatuses, the units, or the modules. The processor 1120 may operate in cooperation with the memory 1130. The processor 1120 may execute the program instructions stored in the memory 1130. Optionally, at least one of the one or more memories may be included in the processor.

A specific connection medium between the transceiver 1112, the processor 1120, and the memory 1130 is not limited in this embodiment of this application. In this embodiment of this application, the memory 1130, the processor 1120, and the transceiver 1112 are connected through a bus 1140 in FIG. 11. The bus is represented by using a bold line in FIG. 11. A connection manner between other components is merely an example for description, and is not limited thereto. The bus may be determined as an address bus, a data bus, a control bus, or the like. For ease of representation, only one thick line indicates the bus in FIG. 11, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or a transistor logic device, a discrete hardware component, or the like; and may implement or perform the methods, steps, and logical block diagrams disclosed in this embodiment of this application. The general-purpose processor may be a microprocessor or any conventional processor or the like. The steps of the methods disclosed with reference to embodiments of this application may be directly performed by a hardware processor, or may be performed by a combination of hardware and software modules in the processor.

In this embodiment of this application, the memory may include but is not limited to a nonvolatile memory, for example, a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), a compact disc read-only memory (Compact Disc Read-Only Memory, CD-ROM), or the like. The memory is any storage medium that can be used to carry or store program code in a form of an instruction or a data structure and that can be read and/or written by a computer (for example, the communication apparatus shown in this application). However, this is not limited thereto. The memory in this embodiment of this application may alternatively be a circuit or any other apparatus that can implement a storage function, and is configured to store program instructions and/or data.

For example, the processor 1120 is mainly configured to process a communication protocol and communication data, control the entire communication apparatus, execute a software program, and process data of the software program. The memory 1130 is mainly configured to store the software program and data. The transceiver 1112 may include a control circuit and an antenna. The control circuit is mainly configured to: perform conversion between a baseband signal and a radio frequency signal, and process a radio frequency signal. The antenna is mainly configured to receive and send a radio frequency signal in a form of an electromagnetic wave. An input/output apparatus, such as a touchscreen, a display, or a keyboard, is mainly configured to: receive data input by a user, and output data to the user.

After the communication apparatus is powered on, the processor 1120 may read the software program in the memory 1130, interpret and execute instructions of the software program, and process data of the software program. When data needs to be sent wirelessly, the processor 1120 performs baseband processing on the to-be-sent data, and then outputs a baseband signal to a radio frequency circuit. The radio frequency circuit performs radio frequency processing on the baseband signal, and then sends out a radio frequency signal through the antenna in a form of an electromagnetic wave. When data is sent to the communication apparatus, the radio frequency circuit receives a radio frequency signal through the antenna, converts the radio frequency signal into a baseband signal, and outputs the baseband signal to the processor 1120. The processor 1120 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely independent of the communication apparatus.

It may be understood that the communication apparatus shown in this embodiment of this application may further have more components and the like than those in FIG. 11. This is not limited in this embodiment of this application. The foregoing methods performed by the processor and the transceiver are merely examples. For specific steps performed by the processor and the transceiver, refer to the methods described above.

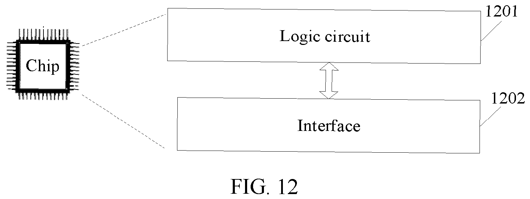

In another possible implementation, in the communication apparatus shown in FIG. 10, the processing unit 1001 may be one or more logic circuits, and the transceiver unit 1002 may be an input/output interface that is also referred to as a communication interface, an interface circuit, an interface, or the like. Alternatively, the transceiver unit 1002 may be a sending unit and a receiving unit. The sending unit may be an output interface, and the receiving unit may be an input interface. The sending unit and the receiving unit are integrated into one unit, for example, an input/output interface. As shown in FIG. 12, a communication apparatus shown in FIG. 12 includes a logic circuit 1201 and an interface 1202. In other words, the processing unit 1001 may be implemented by using the logic circuit 1201, and the transceiver unit 1002 may be implemented by using the interface 1202. The logic circuit 1201 may be a chip, a processing circuit, an integrated circuit, a system-on-chip (system on chip, SoC), or the like. The interface 1202 may be a communication interface, an input/output interface, a pin, or the like. For example, an example in which the foregoing communication apparatus is a chip is used in FIG. 12. The chip includes the logic circuit 1201 and the interface 1202.

In this embodiment of this application, the logic circuit and the interface may be further coupled to each other. A specific connection manner of the logic circuit and the interface is not limited in this embodiment of this application.

In some embodiments of this application, the communication apparatus may be configured to perform the steps, the functions, or the like performed by the STA in the foregoing method embodiments (including FIG. 3). For example, the communication apparatus is a secondary station when primary and secondary stations are distinguished by using an MU-RTS frame (for example, Embodiment 1), or is a station specified by using a user information field (for example, Embodiment 2 or Embodiment 5).

The interface 1202 is configured to input an MU-RTS frame. The MU-RTS frame includes a plurality of user information fields. The user information field includes an allocation duration field. The user information field corresponds to one station. The allocation duration field indicates a first time period corresponding to the station corresponding to the user information field.

The logic circuit 1201 is configured to perform P2P transmission in the first time period based on the MU-RTS frame.

In a possible implementation, the logic circuit 1201 is specifically configured to: ignore, based on the MU-RTS frame, a NAV configured by an access point, perform channel contention in the first time period, and perform P2P transmission in the first time period when channel contention succeeds.

In a possible implementation, the logic circuit 1201 is specifically configured to perform at least one of the following: ignore, based on a value of a triggered TXOP sharing mode field in the MU-RTS frame, the NAV configured by the AP; ignore, based on a quantity of user information fields in the MU-RTS frame, the NAV configured by the AP; and ignore, based on a primary/secondary indication field in the user information field in the MU-RTS frame, the NAV configured by the AP.

In a possible implementation, the logic circuit 1201 is specifically configured to: when a PPDU is received, perform backoff based on a received power of the PPDU and a first CCA threshold. The PPDU includes an intra-BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the logic circuit 1201 is specifically configured to: further perform backoff if the received power of the PPDU is less than or equal to the first CCA threshold; or stop backoff if the received power of the PPDU is greater than the first CCA threshold.

In a possible implementation, the logic circuit 1201 is specifically configured to perform P2P transmission in the first time period based on at least one of the following: an order of a corresponding user information field, a primary/secondary indication field in the corresponding user information field, and the value of the triggered TXOP sharing mode field in the MU-RTS frame.

In a possible implementation, the logic circuit 1201 is specifically configured to perform P2P transmission in the first time period based on the maximum transmit power.

In a possible implementation, the logic circuit 1201 is specifically configured to: when the user information field includes a first indication field, and the first indication field indicates that the station corresponding to the user information field is allowed to perform P2P transmission in the first time period, perform P2P transmission in the first time period based on the maximum transmit power; or when the MU-RTS frame includes a triggered TXOP sharing mode field, and a value of the TXOP sharing mode field is 2 or a value other than 0, 1, and 2, perform P2P transmission in the first time period based on the maximum transmit power.

In some other embodiments of this application, the communication apparatus may be configured to perform the steps, the functions, or the like performed by the STA in the foregoing method embodiments (including FIG. 3). For example, the communication apparatus is a primary station when primary and secondary stations are distinguished by using an MU-RTS frame (for example, Embodiment 1), or is a station that is indicated by using the first indication field to perform UL transmission or P2P transmission (for example, Embodiment 5).

The interface 1202 is configured to input a multi-user request to send MU-RTS frame. The MU-RTS frame includes a plurality of user information fields. The user information field includes an allocation duration field. The user information field corresponds to one station. The allocation duration field indicates a first time period corresponding to the station corresponding to the user information field.

The logic circuit 1201 is configured to perform UL transmission or P2P transmission in the first time period based on the MU-RTS frame.

In a possible implementation, the logic circuit 1201 is specifically configured to perform UL transmission or P2P transmission in the first time period based on at least one of the following: an order of a corresponding user information field, a primary/secondary indication field in the corresponding user information field, and the value of the triggered TXOP sharing mode field in the MU-RTS frame.

In a possible implementation, the logic circuit 1201 is specifically configured to perform UL transmission or P2P transmission in the first time period based on the maximum transmit power.

In a possible implementation, the logic circuit 1201 is specifically configured to: when the user information field includes a first indication field, and the first indication field indicates that the station corresponding to the user information field is allowed to perform UL transmission or P2P transmission in the first time period, perform UL transmission or P2P transmission in the first time period based on the maximum transmit power; or when the MU-RTS frame includes a triggered TXOP sharing mode field, and a value of the TXOP sharing mode field is 2 or a value other than 0, 1, and 2, perform UL transmission or P2P transmission in the first time period based on the maximum transmit power.

In some other embodiments of this application, the communication apparatus may be configured to perform steps, functions, or the like performed by the AP in the foregoing method embodiments (including FIG. 3, Embodiment 1, Embodiment 2, and Embodiment 5).

The logic circuit 1201 is configured to generate a multi-user request to send MU-RTS frame. The MU-RTS frame includes a plurality of user information fields. The user information field includes an allocation duration field. The user information field corresponds to one station. The allocation duration field indicates a first time period corresponding to the station corresponding to the user information field.

The interface 1202 is configured to output the MU-RTS frame.

In some other embodiments of this application, the communication apparatus may be configured to perform the steps, the functions, or the like performed by the STA in the foregoing method embodiments (including FIG. 3). For example, the communication apparatus is an unspecified station in a scenario in which one station is indicated by using one user information field in an MU-RTS frame and one or more stations indicated by using another user information field in the frame (that is, no station is specified) (for example, Embodiment 3).

The interface 1202 is configured to input a multi-user request to send MU-RTS frame. The MU-RTS frame includes a first user information field and a second user information field. The first user information field corresponds to one station. The second user information field corresponds to one or more stations. The first user information field includes a first allocation duration field. The first allocation duration field indicates a first time period corresponding to a station corresponding to the first user information field. The second user information field includes a second allocation duration field. The second allocation duration field indicates a second time period corresponding to a station corresponding to the second user information field.

The logic circuit 1201 is configured to perform P2P transmission in the second time period based on the MU-RTS frame.

In a possible implementation, the logic circuit 1201 is specifically configured to: ignore, based on the MU-RTS frame, a network allocation vector NAV configured by an access point, perform channel contention in the second time period, and perform P2P transmission in the second time period when channel contention succeeds.

In a possible implementation, the logic circuit 1201 is specifically configured to: when a physical layer protocol data unit PPDU is received, perform backoff based on a received power of the PPDU and a first CCA threshold. The PPDU includes an intra-basic service set BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the logic circuit 1201 is specifically configured to: further perform backoff if the received power of the PPDU is less than or equal to the first CCA threshold; or stop backoff if the received power of the PPDU is greater than the first CCA threshold.

In some other embodiments of this application, the communication apparatus may be configured to perform the steps, the functions, or the like performed by the AP in the foregoing method embodiments (including FIG. 3 and Embodiment 3).

The logic circuit 1201 is configured to generate a multi-user request to send MU-RTS frame. The MU-RTS frame includes a first user information field and a second user information field. The first user information field corresponds to one station. The second user information field corresponds to one or more stations. The first user information field includes a first allocation duration field. The first allocation duration field indicates a first time period corresponding to a station corresponding to the first user information field. The second user information field includes a second allocation duration field. The second allocation duration field indicates a second time period corresponding to a station corresponding to the second user information field.

The interface 1202 is configured to output the MU-RTS frame.

In some other embodiments of this application, the communication apparatus may be configured to perform the steps, the functions, or the like performed by the STA in the foregoing method embodiments (including FIG. 3 and Embodiment 4).

The interface 1202 is configured to input a multi-user request to send MU-RTS frame. The MU-RTS frame includes a common information field. The common information field includes a second indication field. The second indication field indicates whether a plurality of stations are allowed to share a first time period. The first time period is a period of time in a transmission opportunity TXOP.

The logic circuit 1201 is configured to: when the second indication field indicates that the plurality of stations are allowed to share the first time period, perform point-to-point P2P transmission in the first time period based on the MU-RTS frame.

In a possible implementation, the logic circuit 1201 is specifically configured to: ignore, based on the MU-RTS frame, a network allocation vector NAV configured by an access point, perform channel contention in the first time period, and perform P2P transmission in the first time period when channel contention succeeds.

In a possible implementation, the logic circuit 1201 is specifically configured to: when a PPDU is received, perform backoff based on a received power of the PPDU and a first clear channel assessment CCA threshold. The PPDU includes an intra-basic service set BSS PPDU, an inter-BSS PPDU, or a PPDU that cannot be determined as an intra-BSS PPDU or an inter-BSS PPDU. The first CCA threshold is greater than or equal to a CCA packet detect threshold.

In a possible implementation, the logic circuit 1201 is specifically configured to: further perform backoff if the received power of the PPDU is less than or equal to the first CCA threshold; or stop backoff if the received power of the PPDU is greater than the first CCA threshold.

In some other embodiments of this application, the communication apparatus may be the AP or the chip shown above, and the chip may be disposed in the AP. In other words, the communication apparatus may be configured to perform the steps, the functions, or the like performed by the AP in the foregoing method embodiments (including FIG. 3 and Embodiment 4).

The logic circuit 1201 is configured to generate a multi-user request to send MU-RTS frame. The MU-RTS frame includes a common information field. The common information field includes a second indication field. The second indication field indicates whether a plurality of stations are allowed to share a first time period. The first time period is a period of time in a transmission opportunity TXOP.

The interface 1202 is configured to output the MU-RTS frame.

It may be understood that specific descriptions of the logic circuit and the interface shown in this embodiment of this application are merely examples. For specific functions, performed steps, or the like of the logic circuit and the interface, refer to the foregoing method embodiments. Details are not described herein again.

In the foregoing embodiments, for descriptions of the MU-RTS frame, the user information field, the common information field, the triggered TXOP sharing mode field, and the like, refer to the descriptions in the foregoing method embodiments. Details are not described herein again.

It may be understood that the communication apparatus shown in this embodiment of this application may implement the method provided in this embodiment of this application in a form of hardware or in a form of software. This is not limited in this embodiment of this application.

For specific implementations of the embodiments shown in FIG. 12, refer to the foregoing embodiments. Details are not described herein again.

An embodiment of this application further provides a wireless communication system. The wireless communication system includes a STA and an AP. The STA and the AP may be configured to perform the method in any one of the foregoing embodiments (for example, FIG. 3, and Embodiment 1 to Embodiment 5).

In addition, this application further provides a computer program. The computer program is used to implement operations and/or processing performed by a STA in the method provided in this application.

This application further provides a computer program. The computer program is used to implement operations and/or processing performed by an AP in the method provided in this application.

This application further provides a computer-readable storage medium. The computer-readable storage medium stores computer code. When the computer code runs on a computer, the computer is enabled to perform operations and/or processing performed by a STA in the method provided in this application.

This application further provides a computer-readable storage medium. The computer-readable storage medium stores computer code. When the computer code runs on a computer, the computer is enabled to perform operations and/or processing performed by an AP in the method provided in this application.

This application further provides a computer program product. The computer program product includes computer code or a computer program. When the computer code or the computer program runs on a computer, operations and/or processing performed by a STA in the method provided in this application are/is performed.

This application further provides a computer program product. The computer program product includes computer code or a computer program. When the computer code or the computer program runs on a computer, operations and/or processing performed by an AP in the method provided in this application are/is performed.

In the several embodiments provided in this application, it should be understood that the disclosed system, apparatus, and method may be implemented in other manners. For example, the described apparatus embodiments are merely examples. For example, division into the units is merely logical function division. In actual implementation, another division manner may be used. For example, a plurality of units or components may be combined or integrated into another system, or some features may be ignored or may not be performed. In addition, the shown or discussed mutual couplings, direct couplings, or communication connections may be indirect couplings or communication connections through some interfaces, apparatuses, or units, or may be electrical connections, mechanical connections, or connections in other forms.

The units described as separate parts may or may not be physically separate, and parts displayed as units may or may not be physical units, may be located in one position, or may be distributed on a plurality of network units. Some or all the units may be selected according to actual requirements to achieve the technical effects of the solutions provided in embodiments of this application.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or parts contributing to the conventional technologies, or all or some of the technical solutions may be embodied in a form of a software product. The computer software product is stored in a readable storage medium, and includes several instructions for instructing a computer device (which may be a personal computer, a server, a network device, or the like) to perform all or some of the steps of the methods described in embodiments of this application. The foregoing readable storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A channel contention-based communication method, wherein the method comprises:
receiving a multi-user request to send MU-RTS frame, wherein the MU-RTS frame comprises a plurality of user information fields, the user information field comprises an allocation duration field, one user information field corresponds to one station, and the allocation duration field indicates a first time period corresponding to the station corresponding to the user information field; and
performing point-to-point P2P transmission in the first time period based on the MU-RTS frame.

2. The method according to claim 1, wherein the performing P2P transmission in the first time period based on the MU-RTS frame comprises:
ignoring, based on the MU-RTS frame, a network allocation vector NAV configured by an access point, performing channel contention in the first time period, and performing P2P transmission in the first time period when channel contention succeeds.

3. The method according to claim 2, wherein the performing channel contention in the first time period comprises:
when a physical layer protocol data unit PPDU is received, performing backoff based on a received power of the PPDU and a first clear channel assessment CCA threshold, wherein the PPDU comprises an intra-basic service set BSS PPDU, an inter-BSS PPDU, or a PPDU that cannot be determined as an intra-BSS PPDU or an inter-BSS PPDU, and the first CCA threshold is greater than or equal to a CCA packet detect threshold.

4. The method according to claim 3, wherein the performing backoff based on a received power of the PPDU and a first clear channel assessment CCA threshold comprises:
further performing backoff if the received power of the PPDU is less than or equal to the first CCA threshold; or
stopping backoff if the received power of the PPDU is greater than the first CCA threshold.

5. The method according to any one of claims 1 to 4, wherein the plurality of user information fields comprise at least one first user information field, and a station corresponding to the first user information field is a secondary station.

6. The method according to claim 5, wherein the first user information field is a non-1^{st} user information field in the plurality of user information fields; or
the first user information field further comprises a primary/secondary indication field, and the primary/secondary indication field indicates that the station corresponding to the first user information field is the secondary station.

7. The method according to any one of claims 1 to 6, wherein the MU-RTS frame further comprises a triggered transmission opportunity TXOP sharing mode field, and a value of the triggered TXOP sharing mode field is 2 or a value other than 0, 1, and 2.

8. The method according to claim 6 or 7, wherein the performing P2P transmission in the first time period based on the MU-RTS frame comprises:
performing P2P transmission in the first time period based on at least one of the following:
an order of a corresponding user information field, a primary/secondary indication field in the corresponding user information field, and the value of the triggered TXOP sharing mode field in the MU-RTS frame.

9. The method according to claim 1, wherein the user information field further comprises a power indication field, and the power indication field indicates a maximum transmit power of the station corresponding to the user information field in the first time period.

10. The method according to claim 9, wherein the performing P2P transmission in the first time period based on the MU-RTS frame comprises:
performing P2P transmission in the first time period based on the maximum transmit power.

11. The method according to claim 10, wherein the performing P2P transmission in the first time period based on the maximum transmit power comprises:
when the user information field comprises a first indication field, and the first indication field indicates that the station corresponding to the user information field is allowed to perform P2P transmission in the first time period, performing P2P transmission in the first time period based on the maximum transmit power; or
when the MU-RTS frame comprises a triggered TXOP sharing mode field, and a value of the TXOP sharing mode field is 2 or a value other than 0, 1, and 2, performing P2P transmission in the first time period based on the maximum transmit power.

12. A channel contention-based communication method, wherein the method comprises:
receiving a multi-user request to send MU-RTS frame, wherein the MU-RTS frame comprises a plurality of user information fields, the user information field comprises an allocation duration field, one user information field corresponds to one station, and the allocation duration field indicates a first time period corresponding to the station corresponding to the user information field; and
performing uplink UL transmission or point-to-point P2P transmission in the first time period based on the MU-RTS frame.

13. The method according to claim 12, wherein the plurality of user information fields comprise one second user information field, and the second user information field corresponds to a primary station.

14. The method according to claim 13, wherein the second user information field is a 1^{st} user information field in the plurality of user information fields; or
the second user information field further comprises a primary/secondary indication field, and the primary/secondary indication field indicates that the station corresponding to the second user information field is the primary station.

15. The method according to any one of claims 12 to 14, wherein the MU-RTS frame further comprises a triggered transmission opportunity TXOP sharing mode field, and a value of the triggered TXOP sharing mode field is 2 or a value other than 0, 1, and 2.

16. The method according to claim 14 or 15, wherein the performing UL transmission or P2P transmission in the first time period based on the MU-RTS frame comprises:
performing UL transmission or P2P transmission in the first time period based on at least one of the following:
an order of a corresponding user information field, a primary/secondary indication field in the corresponding user information field, and the value of the triggered TXOP sharing mode field in the MU-RTS frame.

17. The method according to claim 12, wherein the user information field further comprises a power indication field, and the power indication field indicates a maximum transmit power of the station corresponding to the user information field in the first time period.

18. The method according to claim 17, wherein the performing UL transmission or P2P transmission in the first time period based on the MU-RTS frame comprises:
performing UL transmission or P2P transmission in the first time period based on the maximum transmit power.

19. The method according to claim 18, wherein the performing UL transmission or P2P transmission in the first time period based on the maximum transmit power comprises:
when the user information field comprises a first indication field, and the first indication field indicates that the station corresponding to the user information field is allowed to perform UL transmission or P2P transmission in the first time period, performing UL transmission or P2P transmission in the first time period based on the maximum transmit power; or
when the MU-RTS frame comprises a triggered TXOP sharing mode field, and a value of the TXOP sharing mode field is 2 or a value other than 0, 1, and 2, performing UL transmission or P2P transmission in the first time period based on the maximum transmit power.

20. A channel contention-based communication method, wherein the method comprises:
generating a multi-user request to send MU-RTS frame, wherein the MU-RTS frame comprises a plurality of user information fields, the user information field comprises an allocation duration field, one user information field corresponds to one station, and the allocation duration field indicates a first time period corresponding to the station corresponding to the user information field; and
sending the MU-RTS frame.

21. The method according to claim 20, wherein the MU-RTS frame further comprises a triggered transmission opportunity TXOP sharing mode field, and a value of the triggered TXOP sharing mode field is 2 or a value other than 0, 1, and 2.

22. The method according to claim 20 or 21, wherein the plurality of user information fields comprise at least one first user information field, and a station corresponding to the first user information field is a secondary station.

23. The method according to claim 22, wherein the first user information field is a non-1^{st} user information field in the plurality of user information fields; or
the first user information field further comprises a primary/secondary indication field, and the primary/secondary indication field indicates that the station corresponding to the first user information field is the secondary station.

24. The method according to any one of claims 20 to 23, wherein the plurality of user information fields comprise one second user information field, and the second user information field corresponds to a primary station.

25. The method according to claim 24, wherein the second user information field is a 1^{st} user information field in the plurality of user information fields; or
the second user information field further comprises a primary/secondary indication field, and the primary/secondary indication field indicates that the station corresponding to the second user information field is the primary station.

26. The method according to claim 20 or 21, wherein the user information field further comprises a power indication field, and the power indication field indicates a maximum transmit power of the station corresponding to the user information field in the first time period.

27. The method according to claim 26, wherein the user information field further comprises a first indication field, and the first indication field indicates that the station corresponding to the user information field is allowed to perform uplink UL transmission or point-to-point P2P transmission in the first time period, or the first indication field indicates that the station corresponding to the user information field is allowed to perform P2P transmission in the first time period.

28. A communication apparatus, comprising a unit configured to perform the method according to any one of claims 1 to 27.

29. A communication apparatus, comprising a processor and a memory, wherein
the processor is configured to store computer instructions; and
the processor is configured to execute the computer instructions, so that the method according to any one of claims 1 to 27 is performed.

30. A computer-readable storage medium, wherein the computer-readable storage medium is configured to store instructions, and when the instructions are executed, the method according to any one of claims 1 to 27 is performed.

31. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 27 is performed.

32. A communication system, comprising a station STA and an access point AP, wherein the STA is configured to perform the method according to any one of claims 1 to 19, and the AP is configured to perform the method according to any one of claims 20 to 27.
